# EUROPEAN PATENT SPECIFICATION

(11) **EP 0 553 905 B1**
(45) Date of publication and mention of the grant of the patent: **15.04.1998**
(21) Application number: 93200061.5
(22) Date of filing: 12.01.1993
(51) Int. Cl.: G06K 7/10, G06K 7/00

(54) **Method for exchanging information between a detection station and at least one tag in an identification/communication system, system for application of the method, and tag and detection station for use in the system, and method for identifying different tags by a detection station in the identification/communication system**
Verfahren zum Informationsaustausch zwischen einer Detektionsstation und wenigstens einem Label in einem Identifizierungs-Kommunikationssystem, System zur Durchführung des Verfahrens, Label und Station zur Verwendung im System, und Verfahren zur Identifizierung von verschiedenen Labels von einer Detektionsstation
Méthode d'échange d'information entre une station de détection et au moins un label dans un système d'identification/communication, système d'application de la méthode, et label et station de détection à utiliser dans le système, et méthode à identifier labels différents par une station de détection dans le système d'identification/communication

(30) Priority: 25.06.1992 NL 9201133; 24.01.1992 NL 9200142
(43) Date of publication of application: 04.08.1993
(73) Proprietor: Koninklijke PTT Nederland N.V., 2509 CH Den Haag (NL)
(72) Inventor: van Pomeren, Frank Pieter, NL-2624 NZ Delft (NL)

(56) References cited:
- EP-A- 0 285 419
- EP-A- 0 405 695
- EP-A- 0 427 342
- GB-A- 2 077 555

## Description

### A Background of the invention

The invention relates to a method for exchanging information between a detection station and at least one tag in an identification/communication system which tag is provided with processor means and with battery means and with activatable and, after activation, deactivatable switching means for switching said battery means on and off, which battery means supply power to said processor means in case of being switched on, comprising the steps of
- transmitting an activation signal from said detection station to said at least one tag,
- activating the switching means in response to said activation signal for switching on said battery means,
- transmitting a unique tag code associated with the tag whose switching means have been activated from said tag to said detection station.

EP-A-0 285 419 discloses a method for exchanging information between a detection station and at least one tag in an identification/communication system, which tag is provided with processor means and with battery means and with activatable and, after activation, deactivatable switching means for switching said battery means on and off, which battery means supply power to said processor means in case of being switched on. As long as this tag is out of reach it is in a standby, power conserving mode. As soon as the tag is within reach of the detection station, the tag is switched from the standby mode into an active mode. To identify a tag, an identification protocol is used. Because many tags can be, at the same time, within reach of the detection station, an anti-collision protocol may be necessary to identify each tag. As soon as a tag has been identified, communication becomes possible between the detection station and the identified tag. Both this identification protocol and the anti-collision protocol are complex and time-consuming, which is disadvantageous.

Further it is observed that document EP-A-0 405 695 relates to so-called passive tags (tags without a battery), while the invention relates to so-called active tags (tags including a battery). According to the system as disclosed in document EP-A-0 405 695, a problem will arise as soon as new tags come within reach of the detection station during the identification of tags already present within this reach. According to the method, system, detection station and tag according to the invention, this problem will not arise.

### B Summary of the invention

The object of the invention is, inter alia, to provide a method, of the type described in the preamble, which method can be based upon an identification protocol and an anti-collision protocol which both are less complex and less time consuming.

The method according to the invention is characterised in that the method further comprises the steps of
- transmitting a sleep command comprising said unique tag code from said detection station to said tag, and
- deactivating the switching means in response to said sleep command for switching off said battery means.

By using an activation signal originating from the detection station for switching on the battery means of the tag, and using a sleep command originating from the detection station for switching off the battery means of the tag, the tag still being within reach of the detection station, the method according to the invention can be based upon an identification protocol and an anti-collision protocol which both are less complex and less time consuming.

The invention is based on the insight that the energy present in the tag can be used more economically if the processor means are switched on only now and then for short periods, than if the processor means are switched on continuously and, most of the time, unnecessarily. As a rule, a tag in an identification/communication system will be in the vicinity of a detection station only during a small fraction of the time, and only then is energy required, and often only during a yet smaller fraction of the time if different tags are present in the vicinity of a detection station and exchange information therewith which is "multiplexed" in time.

If the detection station already has available the unique tag code of the tag whose switching means are activated, the detection station can deactivate, via the sleep command, the switching means of said tag, whereupon the detection station can start exchanging information (such as identifying and/or communicating) with another tag whose switching means are still activated. This prevents, in the case where in response to an activation signal the switching means of two tags, for example, have been activated and information is being exchanged with a first tag, the switching means of a second tag remaining activated inappropriately, as a consequence of which the energy present in the second tag is used more efficiently.

In a first embodiment, the method according to the invention is characterised in that the step of transmitting said unique tag code comprises the steps of
- transmitting an identification command from said detection station to said tag,
- transmitting an identification response comprising said unique tag code from said tag to said detection station in response to this identification command, and
- storing said unique tag code inside said detection station.

In a second embodiment, the method according to the invention is characterised in that the method comprises the steps of
- transmitting an alias command comprising said unique tag code and a temporary code linked to said unique tag code from said detection station to said tag, and
- storing said temporary code inside said tag.

If the detection station already has available the unique tag code of the tag whose switching means are activated, the detection station can, via the alias command, send the temporary code, which is linked to the unique code, to the tag which stores said temporary code. Because said temporary code is shorter than the unique code, information can be exchanged more rapidly, as a consequence of which the energy present in the tag is used more efficiently.

In a third embodiment, the method according to the invention is characterised in that the method comprises the steps of
- transmitting a general stop command comprising a standard temporary code from said detection station to said at least one tag, and
- deactivating, in response to said general stop command, the switching means of tags whose switching means have been activated and which have not stored a temporary code for switching off the battery means of these tags.

If the detection station, after an alias command, emits the general stop command, the switching means of all those tags which have not had a temporary code sent to them are deactivated, as a consequence of which the energy present in said tags is used more efficiently.

In a fourth embodiment, the method according to the invention is characterised in that communication between the detection station and the tag whose switching means have been activated takes place via read commands and write commands which are emitted by the detection station and which comprise the temporary code of the tag.

After the detection station has emitted an alias command and a tag has hereby acquired a temporary code, communication can take place between the detection station (master) and the tag (slave). The detection station emits a read command if the tag is to read out and to send particular data to the detection station, and the detection station emits a write command (containing data) if the tag is to store the data associated herewith. Both commands are as short as possible as a result of using the temporary code instead of the unique tag code, which provides for rapid communication and which favourably affects the energy consumption of the tag.

In a fifth embodiment, the method according to the invention is characterised in that the method comprises the steps of
- transmitting a stop command comprising the temporary code of the tag whose switching means have been activated from said detection station to said tag, and
- deactivating the switching means of said tag in response to the stop command for switching off the battery means.

If the detection station, after an alias command, emits the stop command, the switching means of the tag which has had the temporary code assigned to it are deactivated, as a consequence of which the energy present in that tag is used more efficiently.

In a sixth embodiment, the method according to the invention is characterised in that the method comprises the steps of
- transmitting at least two identification responses each comprising a unique tag code associated with one tag from at least two tags whose switching means (64) have been activated to said detection station in response to an identification command,
- transmitting a collision command from said detection station to said tags,
- reducing the response probability of each one of said tags in response to said collision command, and
- each one of said tags transmitting or not transmitting in dependence of a reduced response probability a collision response, which collision response comprises the unique tag code.

If the detection station does not yet have available the unique tag code of the tag whose switching means are activated, the detection station may make the unique code of the tag available to itself via the identification command, as a consequence of said tag, in response to an identification command, sending back an identification response which comprises the unique code. If there are, however, in the vicinity of the detection station, different tags whose switching means are activated, all those tags will send back their identification response, each with a response probability which, for example, is equal to 100% (unless, for example, it is known in advance that there are always two or more tags close together, in which case the tags, even in response to the first identification command, send back their identification responses with a response probability of, for example, 75%, 50% or 25%), and the detection station will receive a mixture of said identification responses. In response hereto, the detection station emits a collision command which reduces the response probability and, in response to the collision command all the abovementioned tags send back the collision response, each now, however, with a reduced response probability of, for example, 50%, whereby the probability of a further collision is reduced and the probability of an identification is increased, (the collision response comprises the unique tag code associated with a tag, as well as the identification response).

In a seventh embodiment, the method according to the invention is characterised in that the method comprises the steps of
- receiving at least two collision responses at said detection station,
- transmitting a collision command from said detection station to said tags,
- further reducing the response probability of each one of said tags in response to said collision command, and
- each one of said tags transmitting or not transmitting in dependence of a further reduced response probability a collision response, which collision response comprises the unique tag code.

If at least two tags, in response to the collision command, each send back a collision response, the detection station will receive a mixture of said collision responses. In response hereto, the detection station again emits a collision command which further reduces the response probability, and in response to the collision command all the abovementioned tags again send back the collision response, each now, however, with a further reduced response probability of, for example, 25%, whereby the probability of a yet further collision is reduced and the probability of an identification further increases.

In an eighth embodiment, the method according to the invention is characterised in that the method comprises the steps of
- receiving one collision response comprising one unique tag code at said detection station,
- transmitting a sleep command comprising the one unique tag code from said detection station to the one tag, and
- deactivating the switching means of the one tag in response to said sleep command for switching off the battery means of the one tag.

If one tag, in response to the collision command, sends back the collision response, said tag has been identified by the detection station, and the detection station now has available the unique tag code of the tag and the detection station can deactivate the switching means of said tag via the sleep command, whereupon the detection station can start exchanging information (such as identifying and/or communicating) with another tag whose switching means are still activated.

In a ninth embodiment, the method according to the invention is characterised in that the method comprises the steps of
- receiving one collision response comprising one unique tag code at said detection station,
- transmitting an alias command comprising the one unique tag code and a temporary code linked to the one unique tag code from said detection station to the one tag, and
- storing said temporary code inside said tag.

If one tag, in response to the collision command, sends back the collision response, said tag has been identified by the detection station, and the detection station now has available the unique tag code of the tag, and the detection station can, via the alias command, send the temporary code, which is linked to the unique code, to the tag which stores said temporary code.

In a tenth embodiment, the method according to the invention is characterised in that communication between the detection station and the one tag takes place via read commands and write commands which are emitted by the detection station and which comprise the temporary code of the one tag.

After the detection station has emitted an alias command and a tag has hereby acquired a temporary code, communication can take place between the detection station (master) and the tag (slave). The detection station emits a read command if the tag is to read out and to send particular data, to the detection station, and the detection station emits a write command (containing data) if the tag is to store the data associated herewith.

In an eleventh embodiment, the method according to the invention is characterised in that the method comprises the steps of
- transmitting a stop command comprising the temporary code of the one tag from said detection station to the one tag, and
- deactivating the switching means of the one tag in response to the stop command for switching off the battery means of the one tag.

If the detection station, after an alias command, emits the stop command, the switching means of the tag which has had the temporary code assigned to it, are deactivated.

In a twelfth embodiment, the method according to the invention is characterised in that the method comprises the steps of
- transmitting an identification command from said detection station to the tags whose switching means are still activated,
- increasing the response probability of each one of said tags in response to said identification command, and
- each one of said tags transmitting or not transmitting in dependence of an increased response probability an identification response, which identification response comprises the unique tag code.

After the detection station has emitted a sleep command or a stop command, the switching means of the tag whose unique tag code (in the case of the sleep command) and whose temporary code (in the case of the stop command) were known are deactivated, and the detection station, via the identification command, can find out whether unknown tags whose switching means are activated are still present in the vicinity of the detection station. In this case, the identification command increases the response probability of the tags (if that probability was, for example, 50%, the response probability becomes, for example, 100%, and if that probability was 100%, the response probability remains 100% because it can obviously not be increased any further).

In a thirteenth embodiment, the method according to the invention is characterised in that a tag whose switching means (64) have been activated, in response to receiving collision commands and identification commands, generates a random code and compares said random code with a setting code for the purpose of determining the response probability, a value of the setting code changing in one sense in response to a collision command, and changing in the other sense in response to an identification command.

The change of the response probability is achieved in a simple manner, for example by reducing the value of the setting code in response to a collision command, and by increasing the value of the setting code in response to an identification command, and by having the tag reply if the value of the random code is smaller than the value of the setting code. If the setting code, for example, consists of logical ones, the MSB (Most Significant Bit) being positioned to the left and the LSB (Least Significant Bit) being positioned to the right, the reduction of the value of the setting code can be achieved by shifting the setting code to the right and by padding the left-hand side with zeros, and the subsequent increase in the value of the setting code can be achieved by shifting the setting code to the left and padding the right-hand side with ones.

In a fourteenth embodiment, the method according to the invention is characterised in that sleep commands and stop commands comprise a time code, the tag whose switching means have been activated deactivating its switching means in response thereto via timing means which can be set by the time code and which are contained in the tag, the time code being representative for a defined time during which the switching means cannot be activated.

In this way, the detection station is able to prevent the switching means of a tag being activated by the activation signal during the defined time, which is useful, for example, if such a tag will remain in the vicinity of the detection station for a yet longer period, while all the information has already been exchanged and new, unknown tags are approaching the detection station.

In a fifteenth embodiment, the method according to the invention is characterised in that the tag, if it has not received a command during a predetermined period of time, deactivates its switching means by further timing means contained in the tag for switching off its battery means.

If a tag whose switching means are activated reaches a position outside the range of a detection station, the switching means of this tag would remain activated until a subsequent detection station were reached. This would mean very inefficient usage of the energy present in the tag, and it is prevented by having each tag, after the predetermined period of time, itself deactivate its switching means via the further timing means (implemented by means of software or hardware).

The invention further relates to a system for application of the method of the type described in the preamble, comprising at least one detection station and at least one tag , which at least one tag is provided with processor means and with battery means and with activatable and, after activation, deactivatable switching means for switching said battery means on and off, which battery means supply power to said processor means in case of being switched on, said at least one tag being further provided with activating means for activating the switching means in response to an activation signal for switching on said battery means, and third transmitting means for transmitting a unique tag code associated with the tag whose switching means have been activated to said at least one detection station, the said at least one detection station comprising first transmitting means for transmitting said activation signal to said at least one tag.

The system according to the invention is characterised in that said detection station further comprises second transmitting means for transmitting a sleep command comprising said unique tag code to said tag, said tag further comprising deactivating means for deactivating the switching means in response to said sleep command for switching off said battery means.

As a consequence of the tag being provided with processor means and with switching means which, upon activation, switch on the processor means and which, upon deactivation, switch off the processor means, the detection station defines, by means of emitting the activation signal, when the switching means are activated and the processor means are switched on, and by deactivating the switching means some time afterwards by a mechanism to be dealt with later, the energy present in the tag is used economically.

If the detection station already has available the unique tag code of the tag whose switching means are activated, the detection station can deactivate, via the sleep command, the switching means of said tag, whereupon the detection station can start exchanging information (such as identifying and/or communicating) with another tag whose switching means are still activated.

In a first embodiment, the system according to the invention is characterised in that said detection station comprises
- fourth transmitting means for transmitting an identification command to said tag, and
- first storing means for storing said unique tag code inside said detection station,
   said tag comprising
- fifth transmitting means for transmitting an identification response comprising said unique tag code to said detection station in response to this identification command.

In a second embodiment, the system according to the invention is characterised in that the detection station comprises
- sixth transmitting means for transmitting an alias command comprising said unique tag code and a temporary code linked to said unique tag code to said tag,
   said tag comprising
- second storing means for storing said temporary code inside said tag.

If the detection station already has available the unique tag code of the tag whose switching means are activated, the detection station can, via the alias command, send the temporary code, which is linked to the unique code, to the tag which stores said temporary code.

In a third embodiment, the system according to the invention is characterised in that the detection station comprises emitting means for emitting read commands and write commands which comprise the temporary code of the tag for the purpose of communicating with said tag.

After the detection station has emitted an alias command and a tag has hereby acquired a temporary code, communication can take place between the detection station (master) and the tag (slave). The detection station emits a read command if the tag is to read out, and to send particular data to the detection station, and the detection station emits a write command (containing data) if the tag is to store the data associated herewith.

In a fourth embodiment, the system according to the invention is characterised in that the detection station comprises
- first detecting means for detecting at least two identification responses each comprising a unique tag code associated with one tag and each originating from one tag whose switching means have been activated,
- seventh transmitting means for transmitting a collision command to said tags,
   each one of said tags comprising
- reducing means for reducing the response probability of said tag in response to said collision command, and
- eigthth transmitting means for transmitting or not transmitting in dependence of a reduced response probability a collision response, which collision response comprises the unique tag code.

If there are, in the vicinity of the detection station, different tags whose switching means are activated, all those tags will send back their identification response, each with a response probability which, for example, is equal to 100%, and the detection station will receive a mixture of said identification responses. In response hereto, the detection station emits a collision command which reduces the response probability, and in response to the collision command all the abovementioned tags send back the collision response, each now, however, with a reduced response probability of, for example, 50%, whereby the probability of a further collision is reduced and the probability of an identification is increased, (the collision response comprises the unique tag code associated with a tag, as well as the identification response).

In a fifth embodiment, the system according to the invention is characterised in that the detection station comprises
- second detecting means for detecting at least two collision responses at said detection station,
- ninth transmitting means for transmitting a collision command to said tags,
   each one of said tags comprising
- further reducing means for further reducing the response probabilit of each one of said tags in response to said collision command, and
- tenth transmitting means for transmitting or not transmitting in dependence of a further reduced response probability a collision response, which collision response comprises the unique tag code.

If at least two tags, in response to the collision command, each send back a collision response, the detection station will receive a mixture of said collision responses. In response hereto, the detection station again emits a collision command which further reduces the response probability, and in response to the collision command all the abovementioned tags again send back the collision response, each now, however, with a further reduced response probability, whereby the probability of a yet further collision is reduced and the probability of an identification further increases.

In a sixth embodiment, the system according to the invention is characterised in that the detection station comprises
- eleventh transmitting means for transmitting an identification command to the tags whose switching means are still activated, each one of said tags comprising
- increasing means for increasing the response probability in response to said identification command, and
- twelfth transmitting means for transmitting or not transmitting in dependence of an increased response probability an identification response, which identification response comprises the unique tag code.

The change of the response probability is achieved in a simple manner, for example by reducing the value of the setting code in response to a collision command, and by increasing the value of the setting code in response to an identification command, and by having the tag reply if the value of the random code is smaller than the value of the setting code.

The invention yet further relates to a detection station for use in an identification/communication system comprising at least one tag, which at least one tag is provided with processor means and with battery means and with activatable and, after activation, deactivatable switching means for switching said battery means on and off, which battery means supply power to said processor means in case of being switched on, the detection station comprising transmitting means for transmitting an activation signal to said at least one tag for activating the switching means in response to said activation signal for switching on the battery means and receiving means for receiving a unique tag code associated with a tag whose switching means have been activated.

Said detection station according to the invention is characterised in that the detection station further comprises transmitting means for transmitting a sleep command comprising said unique tag code associated with the tag whose switching means have been activated to said tag, for deactivating the switching means for switching off the battery means.

In a first embodiment, the detection station according to the invention is characterised in that the transmitting means transmit an identification command to said tag, said tag in response to said identification command transmitting an identification response comprising said unique tag code to said detection station, which detection station comprises storing means for storing said unique tag code inside said detection station.

In a second embodiment, the detection station according to the invention is characterised in that the transmitting means transmit an alias command comprising said unique tag code and a temporary code linked to said unique tag code to said tag.

In a third embodiment, the detection station according to the invention is characterised in that the transmitting means transmit a general stop command comprising a standard temporary code to said at least one tag, for deactivating, in response to said general stop command, the switching means of tags whose switching means have been activated and which have not stored a temporary code for switching off the battery means of these tags.

In a fourth embodiment, the detection station according to the invention is characterised in that communication between the detection station and the tag whose switching means have been activated takes place via read commands and write commands which are emitted by the detection station and which comprise the temporary code of the tag.

In a fifth embodiment, the detection station according to the invention is characterised in that the transmitting means transmit a stop command comprising the temporary code of the tag whose switching means have been activated to said tag for deactivating the switching means of said tag in response to the stop command for switching off the battery means.

In a sixth embodiment, the detection station according to the invention is characterised in that the detection station comprises detecting means for detecting at least two identification responses each comprising a unique tag code associated with one tag and originating from at least two tags whose switching means have been activated, the transmitting means transmitting a collision command to said tags for reducing the response probability of each one of said tags in response to said collision command, whereby each one of said tags transmits or does not transmit in dependence of a reduced response probability a collision response, which collision response comprises the unique tag code.

In a seventh embodiment, the detection station according to the invention is characterised in that the detecting means detect at least two collision responses, the transmitting means transmitting a collision command to said tags for further reducing the response probability of each one of said tags in response to said collision command, whereby each one of said tags transmits or does not transmit in dependence of a further reduced response probability a collision response, which collision response comprises the unique tag code.

In an eighth embodiment, the detection station according to the invention is characterised in that the detecting means detect one collision response comprising one unique tag code, the transmitting means transmitting a sleep command comprising the one unique tag code to the one tag for deactivating the switching means of the one tag in response to said sleep command for switching off the battery means of the one tag.

In a ninth embodiment, the detection station according to the invention is characterised in that the detecting means detect one collision response comprising one unique tag code, the transmitting means transmitting an alias command comprising the one unique tag code and a temporary code linked to the one unique tag code to the one tag for storing said temporary code inside said tag.

In a tenth embodiment, the detection station according to the invention is characterised in that communication between the detection station and the one tag takes place via read commands and write commands which are emitted by the detection station and which comprise the temporary code of the one tag.

In an eleventh embodiment, the detection station according to the invention is characterised in that the transmitting means transmit a stop command comprising the temporary code of the one tag to the one tag for deactivating the switching means of the one tag in response to the stop command for switching off the battery means of the one tag.

In a twelfth embodiment, the detection station according to the invention is characterised in that the transmitting means transmit an identification command to the tags whose switching means are still activated for increasing the response probability of each one of said tags in response to said identification command, whereby each one of said tags transmits or does not transmit in dependence of an increased response probability an identification response, which identification response comprises the unique tag code.

The invention further relates to a tag for use in an identification/communication system comprising a detection station, which tag is provided with processor means and with battery means and with activatable and, after activation, deactivatable switching means for switching said battery means on and off, which battery means supply power to said processor means in case of being switched on, and which tag further comprises receiving means for receiving an activation signal from said detection station, activating means for activating the switching means in response to said activation signal for switching on said battery means and transmitting means for transmitting to said detection station a unique tag code associated with the tag whose switching means have been activated.

Said tag according to the invention is characterised in that the tag further comprises receiving means for receiving a sleep command comprising said unique tag code from said detection station and deactivating means for deactivating the switching means in response to said sleep command for switching off said battery means.

In a first embodiment of the tag according to the invention, the tag is characterised in that the receiving means receive an identification command from said detection station, the transmitting means transmitting an identification response comprising said unique tag code to said detection station in response to this identification command for storing said unique tag code inside said detection station.

In a second embodiment of the tag according to the invention, the tag is characterised in that the receiving means receive an alias command comprising said unique tag code and a temporary code linked to said unique tag code from said detection station, the tag comprising storing means for storing said temporary code inside said tag.

In a third embodiment of the tag according to the invention, the tag is characterised in that the receiving means receive a general stop command comprising a standard temporary code from said detection station for deactivating, in response to said general stop command, the switching means of the tag in case its switching means have been activated and in case it has not stored a temporary code for switching off the battery means of this tag.

In a fourth embodiment of the tag according to the invention, the tag is characterised in that communication between the detection station and the tag whose switching means have been activated takes place via read commands and write commands which are emitted by the detection station and which comprise the temporary code of the tag.

In a fifth embodiment of the tag according to the invention, the tag is characterised in that the receiving means receive a stop command comprising the temporary code of the tag whose switching means have been activated from said detection station for deactivating the switching means of said tag in response to the stop command for switching off the battery means.

In a sixth embodiment, the tag according to the invention is characterised in that the receiving means receive a collision command from said detection station, the tag comprising reducing means for reducing the response probability of said tag in response to said collision command, the transmitting means transmitting or not transmitting in dependence of a reduced response probability a collision response, which collision response comprises the unique tag code.

In a seventh embodiment, the tag according to the invention is characterised in that the receiving means receive a collision command from said detection station, the reducing means further reducing the response probability of said tag in response to said collision command, the transmitting means transmitting or not transmitting in dependence of a further reduced response probability a collision response, which collision response comprises the unique tag code.

In an eighth embodiment, the tag according to the invention is characterised in that the receiving means receive an identification command from said detection station, the tag comprising increasing means for increasing the response probability of said tag in response to said identification command, the transmitting means transmitting or not transmitting in dependence of an increased response probability an identification response, which identification response comprises the unique tag code.

In a ninth embodiment, the tag according to the invention is characterised in that the tag comprises generating means for, in response to collision commands and identification commands, generating a random code and comprises comparing means for comparing said random code with a setting code for the purpose of determining the response probability, a value of the setting code changing in one sense in response to a collision command, and changing in the other sense in response to an identification command.

In a tenth embodiment, the tag according to the invention is characterised in that sleep commands and stop commands comprise a time code, the deactivating means deactivating the switching means in response thereto via timing means which can be set by the time code and which are contained in the tag, the time code being representative for a defined time during which the switching means cannot be activated.

In an eleventh embodiment, the tag according to the invention is characterised in that the deactivating means deactivate, if the tag has not received a command during a predetermined period of time, the switching means by further timing means contained in the tag for switching off its battery means."
- C: Reference
- ■: EP-A-0 285 419 Access control equipment
EP-A-0-405 695 An electromagnetic identification system for identifying a plurality of coded responders simultaneously present in an interrogation field.
- D: Exemplary embodiments

The invention will be explained in more detail by reference to an exemplary embodiment shown in the figures. Of these,
Figure 1 shows a flow diagram of the method according to the invention, information being exchanged between a detection station and a known tag,
Figure 2 shows a flow diagram of the method according to the invention, information being exchanged between a detection station and one or more unknown tags,
Figure 3 shows a flow diagram of the method according to the invention, information being exchanged between a detection station and a known tag, supplementary to the flow diagram shown in Figure 2,
Figure 4 shows a diagram of a detection station for use in an identification/communication system according to the invention, and
Figure 5 shows a diagram of a tag for use in an identification/communication system according to the invention.

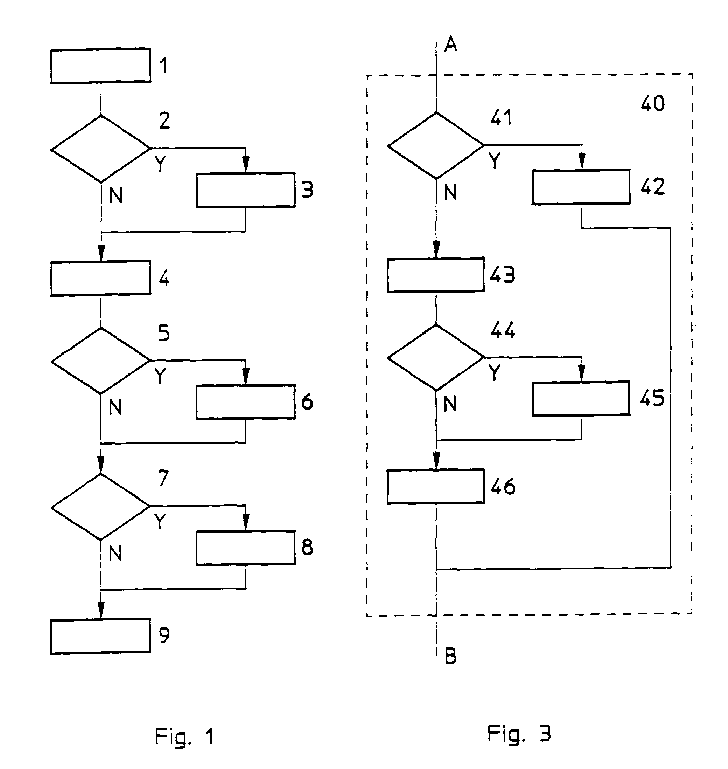

The boxes in the flow diagram shown in Figure 1 have the following meaning:

| box | meaning |
|---|---|
| 1 | a detection station emits an activation signal to a known tag (a tag of which a unique tag code is known) which, in response thereto, activates its switching means which switch on processor means associated with the tag. |
| | |
| 2 | the detection station checks whether communication should not take place with a particular (already known) tag (if the switching means of two or more tags are activated), the |
| | switching means of which particular tag should then be deactivated by means of which particular tag of a sleep command: if yes: go to box 3, if no: go to box 4. |
| | |
| 3 | the detection station emits a sleep command which comprises the unique tag code of the particular tag with which communication should not take place, which tag, in response thereto, deactivates its switching means. |
| | |
| 4 | the detection station emits an alias command which comprises the unique tag code of the tag with which communication should take place and also comprises a temporary code, which is linked to said unique tag code by the detection station, which temporary code is stored by the tag. |
| | |
| 5 | the detection station checks whether there could still be unknown tags in the vicinity of the detection station with which communication should not take place and whose switching means are activated; these should then be deactivated by a general stop command to be emitted by the detection station: if yes: go to box 6, if no: go to box 7. |
| | |
| 6 | the detection station emits a general stop command which comprises a standard temporary code, and all the tags whose switching means are activated and which have not had a temporary code assigned to them, because communication with them should not take place, deactivate their switching means in response thereto. |
| | |
| 7 | the detection station checks whether communication should take place with the known tag which has had the temporary code assigned to it: if yes: go to box 8, if no: go to box 9. |
| | |
| 8 | the detection station communicates with the tag via read commands and write commands which comprise the temporary code of the tag. |
| | |
| 9 | the detection station emits a stop command which comprises the temporary code of the tag with which communication has taken place, which tag, in response thereto, deactivates the switching means. |

The method for exchanging information between a detection station and a tag whose unique tag code is known to the detection station, as illustrated in the flow diagram shown in Figure 1, proceeds as follows. The detection station sends the activation signal to the known tag whose unique tag code is known, which tag, in response thereto, activates its switching means which switch on processor means associated with the tag (box 1). The activation signal, for example, is a high-frequency signal which is used for amplitude modulation of a carrier wave, and thus comprises no tag identification, as a result of which the switching means of any tag which, at the time of emission, is positioned within the antenna beam of the detection system are activated (for example by stepping up the high-frequency signal in a tag via a resonant circuit and supplying this to the switching means which switch on the processor means in the tag by establishing a connection between a supply, which is present in the tag, and said processor means). Because the activation signal does not comprise a tag identification, the switching means of several tags may have been activated, and the detection station, on the basis of information stored in its memory means, checks whether there is a real possibility of this (because, for example, two rolling containers, each with a separate tag, are close to one another) and whether no information should be exchanged with a particular (already known) tag, the switching means of which particular tag should then be deactivated by a sleep command (box 2). If this is the case, the detection station emits a sleep command which comprises the unique tag code (5 bytes) of the particular tag with which communication should not take place. The sleep command further comprises a sleep command code (1 byte). Both the unique tag code and the sleep command code are digital codes by which the carrier wave which is emitted by the detection station is amplitude-modulated. All the tags whose switching means are activated and which are located in the antenna beam receive this sleep command. The processor means of the tag with which no information should be exchanged recognise the unique tag code which is present in the sleep command as their own unique tag code and, in response thereto, will deactivate the switching means (box 3). The sleep command therefore has to be emitted once for each tag whose switching means are activated and with which no information should be exchanged, and this sleep command has the result that the energy present in tags is used economically.

Subsequently, the detection station emits an alias command which comprises the unique tag code (5 bytes) of the tag with which information should be exchanged, which further comprises a temporary code (1 byte), which is linked by the detection station to said unique tag code and which is stored by the tag, and further comprises an alias command code (1 byte) (box 4). Because the temporary code is five times as short as the unique tag code, more rapid communication is possible, as a result of which the energy present in the tag is used economically. In response to the alias command, the tag sends back an alias response which comprises the temporary code (1 byte) and an alias response code (1 byte). Since it is possible that between the time when the last but one activation signal was emitted and the moment when the last activation signal was emitted, unknown tags have entered the antenna beam of the detection station, it is not inconceivable that the last activation signal has activated the switching means of said unknown tags (box 5). As a result, their processor means are switched on unnecessarily, because the detection station wishes to communicate with one of the known tags (in this exemplary embodiment). In order to deactivate the switching means of said unknown tags, the detection station emits a general stop command which comprises a standard temporary code (1 byte) and a general stop command code (1 byte) (box 6). The processor means of the unknown tags (which therefore have not had a temporary code assigned to them) detect both codes and deactivate the switching means in response thereto. Hereafter, only the switching means of the known tag with which the detection station wishes to exchange information are activated, and the communication can start via read commands to be emitted by the detection station, which comprise the temporary code of the tag (1 byte), a read command code (1 byte) and an address (1/more bytes). In response to a read command, the tag reads the data which are present at the address and sends back a read response which comprises the temporary code (1 byte), a read response code (1 byte), the address (1/more bytes) and the data (1/more data bytes). Furthermore, the detection station can also emit write commands which comprise the temporary code (1 byte), a write command code (1 byte), an address (1/more bytes) and data to be written (1/more data bytes). In response to a write command, the tag writes the data to be written and sends back the write response which comprises the temporary code (1 byte) and a write response code (1 byte) (box 7, 8).

In order to terminate the communication, or if no communication was requested, the detection station sends a stop command which comprises the temporary code (1 byte) and a stop command code (1 byte). In response thereto, the tag which has had the temporary code assigned to it deactivates its switching means (box 9).

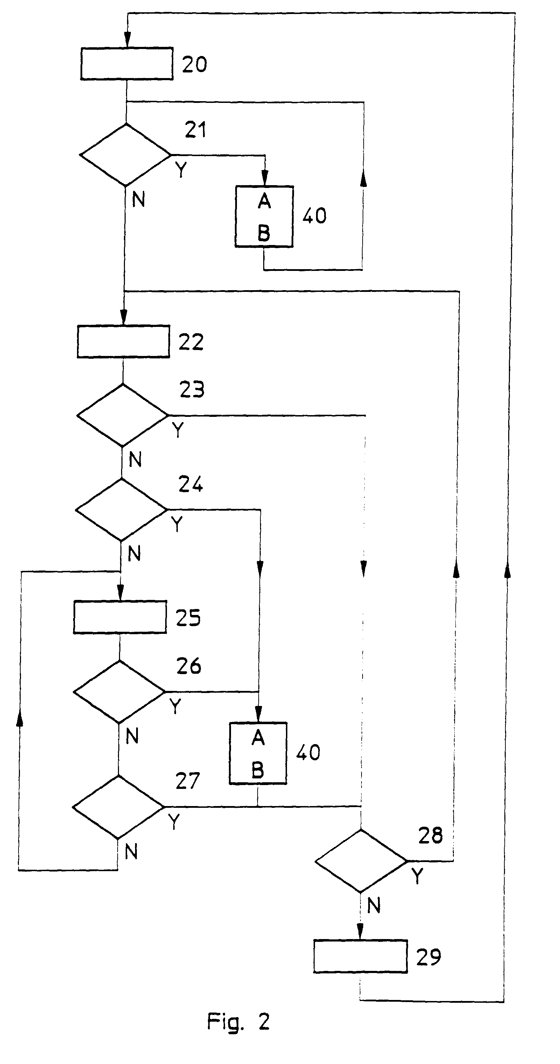

The boxes in the flow diagram illustrated in Figure 2 have the following meaning:

| box | meaning |
|---|---|
| 20 | the detection station emits an activation signal, and any of one or more tags, may in response thereto, activate the switching means which switch on the processor means associated with each tag. |
| | |
| 21 | the detection station checks whether the switching means of known tags might have been actuated (i.e. of tags whose unique tag codes have been stored by the detection station): if yes: go to box 40, if no: go to box 22. |
| | |
| 22 | the detection station sends an identification command, and all the tags whose switching means are activated react thereto by sending back, with a particular response probability, an identification response which comprises the unique code; an already reduced response probability (see box 25) is increased as far as possible by each subsequent identification command; the reaction to the identification command refers only to unknown tags, since the switching means of all the known tags are deactivated, see box 21 and 40, which last box will be dealt with when describing Figure 3. |
| | |
| 23 | the detection station checks whether not a single identification response has been received: if yes: go to box 28, if no: go to box 24, at least one identification response has been received. |
| | |
| 24 | the detection station checks whether one identification response has been received: if yes: go to box 40, if no: go to box 25, at least two identification responses have been received. |
| | |
| 25 | by receiving at least two responses, the detection station establishes that collision has occurred, and it emits a collision command which reduces the response probability of a tag, and all the tags whose switching means are activated react thereto by sending back, with a reduced response probability, a collision response which comprises the unique code. |
| | |
| 26 | the detection station checks whether one collision response has |
| | been received: if yes: go to box 40, if no: go to box 27, zero or at least two collision responses have been received. |
| | |
| 27 | the detection station checks whether not a single collision response has been received: if yes: go to box 28, if no: go to box 25, at least two collision responses have been received. |
| | |
| 28 | the detection station checks whether yet more tags should be identified: if yes: go to box 22, if no: go to box 29. |
| | |
| 29 | the detection station waits until another activation signal should be emitted, go to box 20. |
| | |
| 40 | the detection station emits a possible sleep command, an alias command, a possible communication command and a stop command to a tag whose switching means are activated and whose unique tag code is known; if coming from box 21, the process then returns to box 21, and if coming from box 26, the process then continues with box 28. |

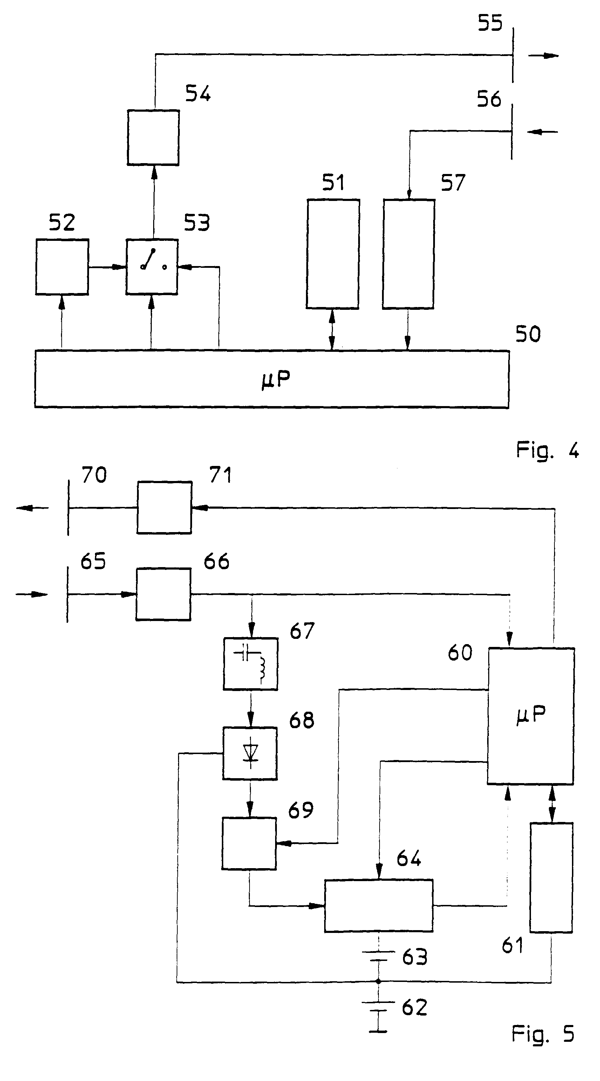

The method for exchanging information between a detection station and an arbitrarily chosen tag, as illustrated in the flow diagram shown in Figure 2, proceeds as follows. The detection station sends the activation signal to any of one or more tags which, in response thereto activate the switching means which switch on the processor means associated with each tag (box 20). Because the activation signal does not comprise any tag identification, the switching means of different tags may have been activated, and the detection station checks, on the basis of the information stored in its memory means, whether there is a real possibility of this and whether communication should or should not take place with one or more already known tags (box 21, 40), which case will be dealt with when describing Figure 3. The following description associated with Figure 2 will be based on the assumption that information should be exchanged with one or more unknown tags.

To this end, the detection station emits an identification command which comprises an identification command code (1 byte). In response thereto, all the unknown tags whose switching means are activated send back, with a particular response probability (which in the first instance, for example, is 100%), an identification response which comprises the unique tag code (5 bytes) and an identification response code (1 byte) (box 22). The detection station then checks whether zero identification responses are being received (box 23). If zero identification responses are being received (for example because, at a response probability of 100%, all the tags are outside the antenna beam of the detection station), the detection station checks whether yet more identifications are to take place (box 28), based on an algorithm to be dealt with later, and if that is the case, the detection station again generates an identification command (box 22) which increases the response probability. But because that was already 100%, the response probability cannot now be increased further. If at least one identification response is received, the detection station checks whether precisely one identification response is received (box 24). If one identification response is received, then the tag which sent it is identified and known, and the detection station checks whether or not communication should take place with this known tags [sic] (box 24, 40), which case will be dealt with when describing Figure 3. If at least two (mixed) identification responses are received (the detection station detects this, for example, on the basis of checksum bytes which are sent as part of the responses and which, in the case of mixed responses, are no longer correct), the detection station establishes collision and generates a collision command which comprises a collision command code (1 byte). In response thereto, all the tags whose switching means are activated send back, with a response probability (of, for example, 50%), which has been reduced as a consequence of receiving the collision command, a collision response which comprises the unique tag code (5 bytes) and a collision response code (1 byte).

The detection station then checks whether precisely one collision response has been received (box 26). If that is the case, the associated tag has been identified, since the collision response comprises the unique tag code, and the detection station checks whether or not communication should take place with this known tags [sic] (box 26, 40), which case will be dealt with when describing Figure 3. If zero or at least two (viz. not one) collision responses have been received, the detection station checks whether zero collision responses have been received (box 27), in which case the detection station checks whether yet more identifications should take place on the basis of the algorithm to be dealt with later (box 28), and if this is the case, the detection station again generates an identification command (box 22), which increases the response probability. If that probability was, for example, 50%, the response probability is now increased once more to, for example, 100%. If at least two (mixed) collision responses have been received (the detection station detects this, for example on the basis of the checksum bytes, which are sent as part of the responses and which, in the case of mixed response, are no longer correct), the detection station again establishes collision and generates an again [sic] collision command (box 25), which comprises a collision command code (1 byte) and which further reduces the response probability (for example to 25% if the response probability was previously 50%).

If no more identifications are to take place (box 28), the detection station waits until another activation signal should be emitted (box 29, 20).

The boxes in the flow diagram illustrated in Figure 3 have the following meaning:

| box | meaning |
|---|---|
| 41 | the detection station checks whether communication should not take place with a particular (already known) tag, of which particular tag the switching means should then be deactivated with a sleep command: if yes: go to box 42, if no: go to box 43. |
| | |
| 42 | the detection station emits a sleep command which comprises the unique tag code of the particular tag with which communication should not take place, which tag in response thereto deactivates its switching means. |
| | |
| 43 | the detection station emits an alias command which comprises the unique tag code of the tag with which communication should take place, and also comprises a temporary code, which is linked by the detection station to this unique tag code and which is stored by the tag. |
| | |
| 44 | the detection station checks whether communication should take place with the known tag which has had the temporary code assigned to it: if yes: go to box 45, if no: go to box 46. |
| | |
| 45 | the detection station communicates with the tag via read commands and write commands which comprise the temporary code of the tag. |
| | |
| 46 | the detection station emits a stop command which comprises the temporary code of the tag with which communication has taken place, which tag, in response thereto, deactivates the switching means. |

The method for exchanging information between a detection station and a tag whose unique tag code is known to the detection station, as illustrated in the flow diagram shown in Figure 3, proceeds as follows. The detection station checks whether information should be exchanged with the known tag (box 41). If this is not the case, the detection station emits a sleep command which comprises the unique tag code (5 bytes) of the particular tag with which no information should be exchanged (box 42). The sleep command further comprises the sleep command code (1 byte). In response to the sleep command, the tag deactivates its switching means.

If information should be exchanged with the known tag, the detection station emits an alias command which comprises the unique tag code (5 bytes) of the tag with which communication should take place, which further comprises a temporary code (1 byte), which is linked by the detection station to said unique tag code and which is stored by the tag, and which comprises an alias command code (1 byte) (box 43). In response to the alias command, the tag sends back an alias response which comprises the temporary code (1 byte) and an alias command code (1 byte). Hereafter, the communication may start if required (box 44) via the read commands to be emitted by the detection station which comprise the temporary code of the tag (1 byte), a read command code (1 byte) and an address (1/more bytes) (box 45). In response to a read command, the tag reads out the data present at the address and sends back a read response which comprises the temporary code (1 byte), a read response code (1 byte), the address (1/more bytes) and the data (1/more data bytes). Further, the detection station can also emit write commands which comprise the temporary code (1 byte), a write command code (1 byte), an address (1/more bytes) and data to be written (1/more data bytes). In response to a write command, the tag writes the data to be written and sends back the write response which comprises the temporary code (1 byte) and a write response code (1 byte) (box 45).

To terminate the communication, or if no communication was required, the detection station sends a stop command which comprises the temporary code (1 byte) and a stop command code (1 byte). In response thereto, the tag which has had a temporary code assigned to it, deactivates its switching means (box 46).

The algorithm mentioned earlier relates to the detection station remembering the number of the identification commands emitted minus the number of collision commands emitted. If that result (which can be negative, zero, or positive) is greater than or equal to the value one (≧ 1), the detection station decides that no more tags should be identified, and if the result is smaller than the value one (< 1) (i.e. zero or negative), the station decides that yet more tags should be identified. This is easily understood, given that a collision command is emitted only after at least two tags have come into collision, which requires at least two identification commands in order to identify the at least two tags, and that each subsequent collision command requires at least one further identification command.

There follows below an overview of possible commands:

| Commands: | |
|---|---|
| Identification command: | START 'I' STOP |
| Collision command: | START 'C' STOP |
| Alias command: | START 'A' TACCODE ALIAS DATIME CRCH CRCL STOP |
| HS alias command: | START 'B' TAGCODE ALIAS DATIME CRCH CRCL STOP |
| "Datime" write command: | START 'D' TACCODE ALIAS DATIME CRCH CRCL STOP |
| Sleep command: | START 'X' TACCODE TIME CRCH CRCL STOP |
| Reset command: | START 'Q' ALIAS PARAMETER CRCH CRCL STOP |
| Stop command: | START 'E' ALIAS TIME CRCH CRCL STOP |
| Listen command: | START 'L' ALIAS TIME CRCH CRCL STOP |
| HS read command: | START 'H' ALIAS CRCH CRCL STOP |
| "Datime" read command: | START 'M' ALIAS CRCH CRCL STOP |
| Read command: | START 'R' ALIAS ADRH ADRL NRDATH NRDATL CRCH CRCL STOP |
| Status command: | START 'S' ALIAS CRCH CRCL STOP |
| Fill command: | START 'F' ALIAS ADRH ADRL NRDATH NRDATL PATTERN CRCH CRCL STOP |
| Write command: | START 'W' ALIAS ADRH ADRL NRDATH NRDATL DATABYTES CRCH CRCL STOP |
| HS write command: | START 'C' ALIAS NRDATA DATABYTES CRCH CRCL STOP |

| Responses: | |
|---|---|
| Sleep response: | undefined |
| Reset response: | undefined |
| Stop response: | undefined |
| Listen response: | undefined |
| Identification response: | START 'i' TACCODE CRCH CRCL STOP |
| Collision response: | START 'c' TACCODE CRCH CRCL STOP |
| Alias response: | START 'a' ALIAS STATUS CRCH CRCL STOP |
| HS alias response: | START 'b' ALIAS STATUS DATIME NRDATA DATABYTES CRCH CRCL STOP |
| "Datime" write response: | START 'd' ALIAS STATUS CRCH CRCL STOP |
| Status response: | START 's' ALIAS STATUS CRCH CRCL STOP |
| HS read response: | START 'h' ALIAS DATIME NRDATA DATABYTES CRCH CRCL STOP |
| "Datime" read response: | START 'm' ALIAS NRDATA DATABYTES CRCH CRCL STOP |
| Read response: | START 'r' ALIAS ADRH ADRL NRDATH NRDATL DATABYTES CRCH CRCL STOP |
| Fill response: | START 'f' ALIAS CRCH CRCL STOP |
| Write response: | START 'w' ALIAS CRCH CRCL STOP |
| HS write response: | START 'g' ALIAS CRCH CRCL STOP |

All the messages, the commands from the detection station, and the answers from the tags, start with a START byte and end with a STOP byte. In addition to ordinary commands and responses there are also so-called "HS" commands and "HS" responses; the difference between them will be dealt with later.

The identification command comprises, between the START byte and the STOP byte, the identification command code 'I' (1 byte), and the collision command comprises, between the START byte and the STOP byte, the collision command code 'C' (1 byte). In the commands and responses following hereinafter, the START byte and the STOP byte will be disregarded. An ordinary alias command contains the ordinary alias command code 'A' (1 byte), the unique tag code TAGCODE (5 bytes), the temporary code ALIAS (1 byte), a date/time stamp DATIME (5 bytes) and a checksum CRCH CRCL (2 bytes). The unique tag code TAGCODE is stored, for example, nonerasably in each tag. The date/time stamp DATIME comprises the date, the time and, for example, a location code of the detection station. An HS alias command contains an HS alias command code 'B' (1 byte), the unique tag code TAGCODE (5 bytes), the temporary code ALIAS (1 byte), the date/time stamp DATIME (5 bytes) and the checksum CRCH CRCL (2 bytes). Both alias commands, by means of the date/time stamp DATIME, send the instantaneous date and time to a tag. A "datime" write command comprises a "datime" write command code 'D' (1 byte), the unique tag code TAGCODE (5 bytes), the temporary code ALIAS (1 byte), the date/time stamp DATIME (5 bytes) and the checksum CRCH CRCL (2 bytes), and its primary objective is to place a new date/time stamp in a tag. A sleep command comprises a sleep command code 'X' (1 byte), the unique tag code TAGCODE (5 bytes), a time code TIME (1 byte) and the checksum CRCH CRCL (2 bytes). A reset command comprises a reset command code 'Q' (1 byte), the temporary code ALIAS (1 byte), a parameter code PARAMETER (1 byte) and the checksum CRCH CRCL (2 bytes). By means of the parameter code PARAMETER, a special command can be sent to a tag. A stop command comprises a stop command code 'E' (1 byte), the temporary code ALIAS (1 byte), the time code TIME (1 byte) and the checksum CRCH CRCL (2 bytes). A listen command comprises a listen command code 'L' (1 byte), the temporary code ALIAS (1 byte), the time code TIME (1 byte) and the checksum CRCH CRCL (2 bytes), and its primary objective is to extend a predefined period of time in order to prevent a tag from deactivating its switching means after said period of time has elapsed (via further timing means contained in the tag). An HS read command comprises an HS read command code 'H' (1 byte), the temporary code ALIAS (1 byte) and the checksum CRCH CRCL (2 bytes). A "datime" read command comprises a "datime" read command code 'M' (1 byte), the temporary code ALIAS (1 byte) and the checksum CRCH CRCL (2 bytes). In response thereto, a tag sends all its (fifty) date/time stamps. An ordinary read command comprises a read command code 'R' (1 byte), the temporary code ALIAS (1 byte), an address code ADRH ADRL (2 bytes), a code for the number of bytes to be read NRDATH NRDATL (2 bytes) and the checksum CRCH CRCL (2 bytes). A status command comprises a status command code 'S' (1 byte), the temporary code ALIAS (1 byte) and the checksum CRCH CRCL (2 bytes). A fill command comprises a fill command code 'F' (1 byte), the temporary code ALIAS (1 byte), the address code ADRH ADRL (2 bytes), the code for the number of bytes to be filled NRDATH NRDATL (2 bytes), a pattern code PATTERN (1 byte) and the checksum CRCH CRCL (2 bytes). By means of the fill command, the memory means of a tag can be filled with a particular pattern. An ordinary write command comprises an ordinary write command code 'W' (1 byte), the temporary code ALIAS (1 byte), the address code ADRH ADRL (2 bytes), the code for the number of bytes to be written NRDATH NRDATL (2 bytes), data to be written (DATABYTES) (number of bytes given by NRDATH NRDATL) and the checksum CRCH CRCL (2 bytes). An HS write command comprises an HS write command code 'G' (1 byte), a code for the number of bytes to be written NRDATA (1 byte), data to be written DATABYTES (number of bytes given by NRDATA) and the checksum CRCH CRCL (2 bytes).

A sleep response, reset response, stop response and listen response are not defined, since a tag does not send back a response in response to sleep commands, reset commands, stop commands and listen commands. An identification response comprises an identification response code 'i' (1 byte), the unique tag code TAGCODE (5 bytes) and the checksum CRCH CRCL (2 bytes). A collision response comprises a collision response code 'c' (1 byte), the unique tag code TAGCODE (5 bytes) and the checksum CRCH CRCL (2 bytes). An ordinary alias response comprises an ordinary alias response code 'a' (1 byte), the temporary code ALIAS (1 byte), a status code STATUS (1 byte) and the checksum CRCH CRCL (2 bytes). An HS alias response comprises an HS alias response code 'b' (1 byte), the temporary code ALIAS (1 byte), the status code STATUS (1 byte), the date/time stamp DATIME (5 bytes), the code for the number of bytes NRDATA (1 byte), the data DATABYTES (number of bytes given by NRDATA) and the checksum CRCH CRCL (2 bytes). This is used by a tag to send its old date/time stamp to the detection station. A "datime" write response comprises a "datime" write response code 'd' (1 byte), the temporary code ALIAS (1 byte), a status code STATUS (1 byte) and the checksum CRCH CRCL (2 bytes). A status response comprises a status response code 's' (1 byte), the temporary code ALIAS (1 byte), a status code STATUS (1 byte) and the checksum CRCH CRCL (2 bytes). An HS read response comprises an HS read response code 'h' (1 byte), the temporary code ALIAS (1 byte), the date/time stamp DATIME (5 bytes), the code for the number of bytes read out NRDATA (1 byte), the data read out DATABYTES (number of bytes given by NRDATA) and the checksum CRCH CRCL (2 bytes). The data read out (DATABYTES) in the case of an HS read response always occupy a fixed location in the memory means of a tag, and this is applied in particular if the assignment of the temporary code ALIAS has failed. A "datime" read response comprises a "datime" read response code 'm' (1 byte), the temporary code ALIAS (1 byte), the code for the number of bytes read out NRDATA (1 byte), the data read out DATABYTES (number of bytes given by NRDATA) and the checksum CRCH CRCL (2 bytes), and it serves to send all the (fifty) date/time stamps. An ordinary read response comprises an ordinary read response code 'r' (1 byte), the temporary code ALIAS (1 byte), the address code ADRH ADRL (2 bytes), the code for the number of bytes read out NRDATH NRDATL (2 bytes), the data read out DATABYTES (number of bytes given by NRDATH NRDATL) and the checksum CRCH CRCL (2 bytes). A fill response comprises a fill response code 'f' (1 byte), the temporary code ALIAS (1 byte) and the checksum CRCH CRCL (2 bytes). An ordinary write response comprises an ordinary write response code 'w' (1 byte), the temporary code ALIAS (1 byte) and the checksum CRCH CRCL (2 bytes). An HS write response comprises an HS write response code 'g' (1 byte), the temporary code ALIAS (1 byte) and the checksum CRCH CRCL (2 bytes).

The temporary code ALIAS is generated by the detection station for the unique tag code TAGCODE of a particular tag which is located in the antenna beam, and is therefore relevant only for as long as the tag is located in that beam. Because the temporary code is five times as short as the unique tag code, information can be exchanged more rapidly. Furthermore, by assigning a special meaning to some temporary codes, common addressing can be achieved. In response to the temporary code ALIASNUL, for example, all those tags react which have not yet had a temporary code assigned to them (after switching on the processor means, the tag automatically has the temporary code ALIASNUL), and in response to the temporary code ALIASFF, for example, all those tags react which did have a temporary code assigned to them. By providing the stop command with the standard temporary code ALIASNUL, all the tags which have not had a temporary code assigned to them deactivate their switching means (the general stop command).

The difference between the ordinary messages and the so-called "HS" messages results from having two possible types of detection station. In the case of ordinary detection stations, also called portals, the tags (fixed to rolling containers, cars, train carriages, living beings, etc.) pass the portal at such a speed that all the possible identification procedures and communication procedures do not create any problems, because the tags are located within the antenna beam of the portal for a sufficiently long period. In the case of HS detection stations, also called HS portals, the tags pass at a higher speed, and they are located within the beam for only a short period, and consequently information should be exchanged rapidly. The difference is illustrated clearly, for example, by the ordinary read command and the HS read command: in the ordinary read command the portal indicates, by the address code ADRH ADRL and the code for the number of bytes to be read NRDATH NRDATL, at which location in the tag a particular number of bytes should be read out (via the ordinary read command code 'R'), while in the HS read command the HS portal only indicates that a particular tag has to read out (via the HS read command code 'H'), said tag in that case knowing which data are involved. The difference is further illustrated, for example, by the ordinary alias response and the HS alias response: the ordinary alias response comprises only the temporary code ALIAS and the status code STATUS (which, for example, indicates the state of the supply source present in the tag), because there is sufficient time to exchange further information, while the HS alias response, in the case of lack of time for subsequent information exchange, immediately comprises more data, such as the date/time stamp DATIME and a number (NRDATA) of bytes with data (DATABYTES). It will be evident that the difference between an ordinary portal and an HS portal lies primarily in the software, and that there are portals which can emit and receive both ordinary and HS messages.

Naturally, the abovementioned identification/ collision procedure can also be used for tags which do not, in this case, make use of their switching means or for tags which are not provided with switching means because they put a continuous load on their supply source via the processor means, without switching these on or off. The detection station should then ensure, via the lock command, that a particular tag does not send back identification responses in response to identification commands and does not send back collision responses in response to collision commands, whereupon the other tag or the other tags can be identified by means of the last-mentioned commands. To this end, the tag could, for example, be designed in such a way as to stop reacting to identification commands and collision commands after having been assigned a temporary code via an alias command, in which case the lock command corresponds to the alias command. If, in that case, an identified tag which has received a lock command moves outside an antenna beam of the detection system, this tag would no longer react, in the case of a subsequent detection station, to identification and collision commands. To prevent this, the tag which has received the lock command after a while gets an unlock command, either from within itself (for example, via further timing means contained in the tag, or from the detection station which is able to send the unlock command, which in that case can comprise the unique tag code of the tag to be unlocked. For the purpose of such an unlock command it would be possible, for example, to use the reset command, in that a tag, in response to a reset command, for example overwrites its assigned temporary code with the standard temporary code ALIASNUL, whereupon the tag will again react to identification commands and collision commands. Adding the 2 bytes with the checksum CRCH CRCL to most of the messages makes it possible to detect errors. The system reacts to an error which has been detected in a message by repeating the command associated with this message once or several times. If this does not result in a message sent back and forth without errors, the system reacts by repeating, in its entirety and after some time (a few seconds), the whole procedure of which the incorrectly sent message forms part. By repeating the procedure in its entirety, the system becomes able to cope even with objects and/or living beings which are located in the antenna beam for a long time.

The detection station (portal) illustrated in Figure 4 comprises a portal processor 50 which is coupled to a RAM 51 and to a first selector contact of changeover switch 53, of which a second selector contact is connected to activation signal generator 52 which, like the changeover switch 53, is controlled by the portal processor 50. A main contact of the changeover switch 53 is coupled to a modulator 54 which modulates a carrier wave, for example in terms of amplitude, either with an activation signal originating from the activation signal generator, or with data originating from the portal processor. The modulator 54 is further coupled to a transmitter antenna 55. The portal also comprises a receiver antenna 56 which, via a demodulator 57, is coupled to the portal processor 50. The demodulator 57 demodulates, for example, a signal, which originates from a tag and which is phase- or frequency-modulated, and supplies the result to the portal processor 50.

The portal illustrated in Figure 4 functions as follows. As soon as deactivated switching means of a tag should be activated, the portal processor 50 sends a signal to the activation signal generator 52 which, in response thereto, generates the activation signal and supplies it, via the second selector contact and the main contact of the changeover switch 53, to the modulator 54, which modulates it and emits it via the transmitter antenna 55.

If information should then be emitted, the portal processor 50 generates a control signal for the changeover switch 53 which, as a result, connects its first selector contact to its main contact, whereupon digital data generated by the portal processor are supplied, via the changeover switch 53, to the modulator 54 which modulates its carrier wave with said digital data and subsequently emits the modulated signal via transmitter antenna 55.

Data sent by a tag in modulated form are received by receiver antenna 56 and demodulated by the demodulator 57 and then supplied to the portal processor 50 which further processes the data.

The tag illustrated in Figure 5 comprises processor means 60 which are coupled to a RAM 61, which RAM 61 is continuously supplied with power via a centre contact of the supply source 62, 63. One side of this is connected to earth, and another side is connected to switching means 64, of which an output is coupled to processor means 60 in order to supply or not supply the supply voltage to the processor means 60. Switching means 64 are controlled by processor means 60 and by timing means 69 which are likewise controlled by processor means 60. The tag further comprises a receiver antenna 65 which, via the demodulator 66, is coupled to processor means 60 and to the resonant circuit 67 which, via the activation signal detector 68, is coupled to timing means 69. The activation signal detector 68 is likewise continuously supplied with power via the centre contact of supply source 62,63. The tag also comprises a transmitter antenna 70 which, via the modulator 71, is coupled to processor means 60.

The tag illustrated in Figure 5 functions as follows. As soon as the portal emits an activation signal modulated on a carrier wave, this signal, if the tag is located within the antenna beam of the portal, is received by the tag via the receiver antenna 65 and demodulated via the demodulator 66. The activation signal is stepped up by the resonant circuit 67, whereupon it is detected by the activation signal detector 68. So long as the timing means 69 have not received a control signal from processor means 60 (within an interruption period to be dealt with later), the timing means 69 form a short circuit by means of which the signal from the activation signal detector 68 activates the switching means 64 which, in response thereto, pass the voltage coming from the supply source 62, 63 to the processor means 60 which switch on in response thereto. Subsequently, the tag can transmit data originating from processor means 60 in modulated form via modulator 71 and transmitter antenna 70, and data which originate from the portal and which were sent in modulated form can be demodulated via receiver antenna 65 and demodulator 66 and can be processed by processor means 60.

If the tag, for example, receives an ordinary alias command, the processor means 60 successively detect the start byte START, the alias command code 'A' (1 byte), the unique tag code TAGCODE (5 bytes), the temporary code ALIAS (1 byte), the date/time stamp DATIME (5 bytes), the checksum CRCH CRCL (2 bytes) and the stop byte STOP. The tag recognises the ordinary alias command by the alias command code 'A' and knows that this command is intended for itself by comparing the unique tag code TAGCODE with its own unique tag code, it adds the temporary code ALIAS to this by storing said temporary code in its RAM 61 (memory means), and adds the instantaneous date/time stamp by likewise storing this in its RAM 61. It then calculates the checksum of the three preceding codes and compares this with the checksum CRCH CRCL. Hereafter, the processor means 60 generate the ordinary alias response which comprises, successively, the start byte, the ordinary alias response code 'a' (1 byte), the temporary code ALIAS (1 byte), the status code STATUS (1 byte), the checksum CRCH CRCL (2 bytes) and the stop byte STOP, which ordinary alias response is then sent to the portal in modulated form.

If the tag receives a stop command, the processor means 60 successively detect the start byte START, the stop command code 'E' (1 byte), the temporary code ALIAS (1 byte), the time code TIME (1 byte), the checksum CRCH CRCL (2 bytes) and the stop byte STOP. The tag recognises the stop command by the stop command code 'E' and knows that this command is intended for itself by comparing the temporary code ALIAS with its own temporary code. The tag then detects the time code. Subsequently it calculates the checksum of the two preceding codes and compares this with the checksum CRCH CRCL. As a function of the time code, the processor means 60 generate a control signal for timing means 69 which, in response thereto, interrupt, for an interruption period determined by the control signal, the connection between the activation signal detector 68 and the switching means 64, as a result of which the switching means 64 can no longer be activated by an activation signal during said interruption period. Immediately after the control signal has been sent, the processor means 60 deactivate the switching means 64, whereby the processor means 60 are switched off and can therefore no longer be switched on during the interruption period. The timing means 69 could, for example, be constructed with a capacitor which is charged with the control signal and which is connected to a threshold value switch for the purpose of blocking, during the time when the voltage over the capacitor exceeds a threshold value, the connection between the activation signal detector 68 and the switching means 64.

## Claims

1. Method for exchanging information between a detection station (50-57) and at least one tag (60-71) in an identification/communication system, which tag is provided with processor means (60) and with battery means (62,63) and with activatable and, after activation, deactivatable switching means (64,67,68,69) for switching said battery means on and off, which battery means (62,63) supply power to said processor means (60) in case of being switched on, comprising the steps of
- transmitting an activation signal from said detection station to said at least one tag,
- activating the switching means (64) in response to said activation signal for switching on said battery means,
- transmitting a unique tag code associated with the tag whose switching means have been activated from said tag to said detection station,
characterised in that the method further comprises the steps of
- transmitting a sleep command comprising said unique tag code from said detection station to said tag, and
- deactivating the switching means (64) in response to said sleep command for switching off said battery means.

2. Method according to Claim 1, characterised in that the step of transmitting said unique tag code comprises the steps of
- transmitting an identification command from said detection station to said tag,
- transmitting an identification response comprising said unique tag code from said tag to said detection station in response to this identification command, and
- storing said unique tag code inside said detection station.

3. Method according to Claim 1 or 2, characterised in that the method comprises the steps of
- transmitting an alias command comprising said unique tag code and a temporary code linked to said unique tag code from said detection station to said tag, and
- storing said temporary code inside said tag.

4. Method according to Claim 3, characterised in that the method comprises the steps of
- transmitting a general stop command comprising a standard temporary code from said detection station to said at least one tag, and
- deactivating, in response to said general stop command, the switching means (64) of tags whose switching means have been activated and which have not stored a temporary code for switching off the battery means (62,63) of these tags.

5. Method according to Claim 3 or 4, characterised in that communication between the detection station and the tag whose switching means have been activated takes place via read commands and write commands which are emitted by the detection station and which comprise the temporary code of the tag.

6. Method according to Claim 3, 4 or 5, characterised in that the method comprises the steps of
- transmitting a stop command comprising the temporary code of the tag whose switching means (64) have been activated from said detection station to said tag, and
- deactivating the switching means of said tag in response to the stop command for switching off the battery means (62,63).

7. Method according to Claim 1, 2, 3, 4, 5 or 6, characterised in that the method comprises the steps of
- transmitting at least two identification responses each comprising a unique tag code associated with one tag from at least two tags whose switching means (64) have been activated to said detection station in response to an identification command,
- transmitting a collision command from said detection station to said tags,
- reducing the response probability of each one of said tags in response to said collision command, and
- each one of said tags transmitting or not transmitting in dependence of a reduced response probability a collision response, which collision response comprises the unique tag code.

8. Method according to Claim 7, characterised in that the method comprises the steps of
- receiving at least two collision responses at said detection station,
- transmitting a collision command from said detection station to said tags,
- further reducing the response probability of each one of said tags in response to said collision command, and
- each one of said tags transmitting or not transmitting in dependence of a further reduced response probability a collision response, which collision response comprises the unique tag code.

9. Method according to Claim 7, characterised in that the method comprises the steps of
- receiving one collision response comprising one unique tag code at said detection station,
- transmitting a sleep command comprising the one unique tag code from said detection station to the one tag, and
- deactivating the switching means of the one tag in response to said sleep command for switching off the battery means of the one tag.

10. Method according to Claim 7, characterised in that the method comprises the steps of
- receiving one collision response comprising one unique tag code at said detection station,
- transmitting an alias command comprising the one unique tag code and a temporary code linked to the one unique tag code from said detection station to the one tag, and
- storing said temporary code inside said tag.

11. Method according to Claim 10, characterised in that communication between the detection station and the one tag takes place via read commands and write commands which are emitted by the detection station and which comprise the temporary code of the one tag.

12. Method according to Claim 10 or 11, characterised in that the method comprises the steps of
- transmitting a stop command comprising the temporary code of the one tag from said detection station to the one tag, and
- deactivating the switching means (64) of the one tag in response to the stop command for switching off the battery means of the one tag.

13. Method according to Claim 9 or 12, characterised in that the method comprises the steps of
- transmitting an identification command from said detection station to the tags whose switching means (64) are still activated,
- increasing the response probability of each one of said tags in response to said identification command, and
- each one of said tags transmitting or not transmitting in dependence of an increased response probability an identification response, which identification response comprises the unique tag code.

14. Method according to Claim 7, 8, 9, 10, 11, 12 or 13, characterised in that a tag whose switching means (64) have been activated, in response to receiving collision commands and identification commands, generates a random code and compares said random code with a setting code for the purpose of determining the response probability, a value of the setting code changing in one sense in response to a collision command, and changing in the other sense in response to an identification command.

15. Method according to any one of the preceding Claims, characterised in that sleep commands and stop commands comprise a time code, the tag whose switching means have been activated deactivating its switching means in response thereto via timing means (69) which can be set by the time code and which are contained in the tag, the time code being representative for a defined time during which the switching means (64) cannot be activated.

16. Method according to any one of the preceding Claims, characterised in that the tag, if it has not received a command during a predetermined period of time, deactivates its switching means (64) by further timing means (69) contained in the tag for switching off its battery means.

17. System comprising at least one detection station (50-57) and at least one tag (60-71), which at least one tag is provided with processor means (60) and with battery means (62,63) and with activatable and, after activation, deactivatable switching means (64,67,68,69) for switching said battery means on and off, which battery means (62,63) supply power to said processor means (60) in case of being switched on, said at least one tag being further provided with activating means (68) for activating the switching means in response to an activation signal for switching on said battery means, and third transmitting means (70,71) for transmitting a unique tag code associated with the tag whose switching means have been activated to said at least one detection station, the said at least one detection station comprising first transmitting means (54,55) for transmitting said activation signal to said at least one tag, characterised in that said detection station further comprises second transmitting means (54,55) for transmitting a sleep command comprising said unique tag code to said tag, said tag further comprising deactivating means (60,69) for deactivating the switching means (64) in response to said sleep command for switching off said battery means.

18. System according to Claim 17, characterised in that said detection station comprises
- fourth transmitting means (54,55) for transmitting an identification command to said tag, and
- first storing means (51) for storing said unique tag code inside said detection station, said tag comprising
- fifth transmitting means (70,71) for transmitting an identification response comprising said unique tag code to said detection station in response to this identification command.

19. System according to Claim 17 or 18, characterised in that the detection station comprises
- sixth transmitting means (54,55) for transmitting an alias command comprising said unique tag code and a temporary code linked to said unique tag code to said tag, said tag comprising
- second storing means (61) for storing said temporary code inside said tag.

20. System according to Claim 19, characterised in that the detection station comprises
- emitting means (54,55) for emitting read commands and write commands which comprise the temporary code of the tag for the purpose of communicating with said tag.

21. System according to Claim 17, 18, 19 or 20, characterised in that the detection station comprises
- first detecting means (50,51) for detecting at least two identification responses each comprising a unique tag code associated with one tag and each originating from one tag whose switching means have been activated,
- seventh transmitting means (54,55) for transmitting a collision command to said tags,
each one of said tags comprising
- reducing means (60,61) for reducing the response probability of said tag in response to said collision command, and
- eigthth transmitting means (70,71) for transmitting or not transmitting in dependence of a reduced response probability a collision response, which collision response comprises the unique tag code.

22. System according to Claim 21, characterised in that the detection station comprises
- second detecting means (50,51) for detecting at least two collision responses at said detection station,
- ninth transmitting means (54,55) for transmitting a collision command to said tags,
each one of said tags comprising
- further reducing means (60,61) for further reducing the response probability of each one of said tags in response to said collision command, and
- tenth transmitting means (70,71) for transmitting or not transmitting in dependence of a further reduced response probability a collision response, which collision response comprises the unique tag code.

23. System according to Claim 22, characterised in that the detection station comprises
- eleventh transmitting means (54,55) for transmitting an identification command to the tags whose switching means are still activated,
each one of said tags comprising
- increasing means (60,61) for increasing the response probability in response to said identification command, and
- twelfth transmitting means (70,71) for transmitting or not transmitting in dependence of an increased response probability an identification response, which identification response comprises the unique tag code.

24. Detection station (50-57) for use in an identification/communication system comprising at least one tag (60-71), which at least one tag is provided with processor means (60) and with battery means (62,63) and with activatable and, after activation, deactivatable switching means (64,67,68,69) for switching said battery means on and off, which battery means (62,63) supply power to said processor means (60) in case of being switched on, the detection station comprising transmitting means (54,55) for transmitting an activation signal to said at least one tag for activating the switching means in response to said activation signal for switching on the battery means and receiving means (56,57) for receiving a unique tag code associated with a tag whose switching means have been activated, characterised in that the detection station further comprises transmitting means (54,55) for transmitting a sleep command comprising said unique tag code associated with the tag whose switching means have been activated to said tag, for deactivating the switching means for switching off the battery means.

25. Detection station according to Claim 24, characterised in that the transmitting means (54,55) transmit an identification command to said tag, said tag in response to said identification command transmitting an identification response comprising said unique tag code to said detection station, which detection station comprises storing means (51) for storing said unique tag code inside said detection station.

26. Detection station according to Claim 24 or 25, characterised in that the transmitting means (54,55) transmit an alias command comprising said unique tag code and a temporary code linked to said unique tag code to said tag.

27. Detection station according to Claim 26, characterised in that the transmitting means (54,55) transmit a general stop command comprising a standard temporary code to said at least one tag, for deactivating, in response to said general stop command, the switching means (64) of tags whose switching means have been activated and which have not stored a temporary code for switching off the battery means (62,63) of these tags.

28. Detection station according to Claim 26 or 27, characterised in that communication between the detection station and the tag whose switching means have been activated takes place via read commands and write commands which are emitted by the detection station and which comprise the temporary code of the tag.

29. Detection station according to Claim 26, 27 or 28, characterised in that the transmitting means (54,55) transmit a stop command comprising the temporary code of the tag whose switching means have been activated to said tag for deactivating the switching means of said tag in response to the stop command for switching off the battery means.

30. Detection station according to Claim 24, 25, 26, 27, 28 or 29, characterised in that the detection station comprises detecting means (50,51) for detecting at least two identification responses each comprising a unique tag code associated with one tag and originating from at least two tags whose switching means have been activated, the transmitting means (54,55) transmitting a collision command to said tags for reducing the response probability of each one of said tags in response to said collision command, whereby each one of said tags transmits or does not transmit in dependence of a reduced response probability a collision response, which collision response comprises the unique tag code.

31. Detection station according to Claim 30, characterised in that the detecting means (50,51) detect at least two collision responses, the transmitting means (54,55) transmitting a collision command to said tags for further reducing the response probability of each one of said tags in response to said collision command, whereby each one of said tags transmits or does not transmit in dependence of a further reduced response probability a collision response, which collision response comprises the unique tag code.

32. Detection station according to Claim 30, characterised in that the detecting means (50,51) detect one collision response comprising one unique tag code, the transmitting means transmitting a sleep command comprising the one unique tag code to the one tag for deactivating the switching (64) means of the one tag in response to said sleep command for switching off the battery means (62,63) of the one tag.

33. Detection station according to Claim 30, characterised in that the detecting means (50,51) detect one collision response comprising one unique tag code, the transmitting means (54,55) transmitting an alias command comprising the one unique tag code and a temporary code linked to the one unique tag code to the one tag for storing said temporary code inside said tag.

34. Detection station according to Claim 33, characterised in that communication between the detection station and the one tag takes place via read commands and write commands which are emitted by the detection station and which comprise the temporary code of the one tag.

35. Detection station according to Claim 33 or 34, characterised in that the transmitting means (54,55) transmit a stop command comprising the temporary code of the one tag to the one tag for deactivating the switching means (64) of the one tag in response to the stop command for switching off the battery means (62,63) of the one tag.

36. Detection station according to Claim 32 or 35, characterised in that the transmitting means (54,55) transmit an identification command to the tags whose switching means (64) are still activated for increasing the response probability of each one of said tags in response to said identification command, whereby each one of said tags transmits or does not transmit in dependence of an increased response probability an identification response, which identification response comprises the unique tag code.

37. Tag (60-71) for use in an identification/communication system comprising a detection station (50-57), which tag is provided with processor means (60) and with battery means (62,63) and with activatable and, after activation, deactivatable switching means (64,67,68,69) for switching said battery means on and off, which battery means (62,63) supply power to said processor means (60) in case of being switched on, and which tag further comprises receiving means (65,66) for receiving an activation signal from said detection station, activating means (68) for activating the switching means (64) in response to said activation signal for switching on said battery means (62,63) and transmitting means (70,71) for transmitting to said detection station a unique tag code associated with the tag whose switching means have been activated, characterised in that the tag further comprises receiving means (65,66) for receiving a sleep command comprising said unique tag code from said detection station and deactivating means (60,69) for deactivating the switching means (64) in response to said sleep command for switching off said battery means.

38. Tag according to Claim 37, characterised in that the receiving means (65,66) receive an identification command from said detection station, the transmitting means (70,71) transmitting an identification response comprising said unique tag code to said detection station in response to this identification command for storing said unique tag code inside said detection station.

39. Tag according to Claim 37 or 38, characterised in that the receiving means (65,66) receive an alias command comprising said unique tag code and a temporary code linked to said unique tag code from said detection station, the tag comprising storing means (61) for storing said temporary code inside said tag.

40. Tag according to Claim 39, characterised in that the receiving means (65,66) receive a general stop command comprising a standard temporary code from said detection station for deactivating, in response to said general stop command, the switching means (64) of the tag in case its switching means have been activated and in case it has not stored a temporary code for switching off the battery means (62,63) of this tag.

41. Tag according to Claim 39 or 40, characterised in that communication between the detection station and the tag whose switching means (64) have been activated takes place via read commands and write commands which are emitted by the detection station and which comprise the temporary code of the tag.

42. Tag according to Claim 39, 40 or 41, characterised in that the receiving means (65,66) receive a stop command comprising the temporary code of the tag whose switching means (64) have been-activated from said detection station for deactivating the switching means of said tag in response to the stop command for switching off the battery means (62,63).

43. Tag according to Claim 37, 38, 39, 40, 41 or 42, characterised in that the receiving means (65,66) receive a collision command from said detection station, the tag comprising reducing means (60,61) for reducing the response probability of said tag in response to said collision command, the transmitting means (70,71) transmitting or not transmitting in dependence of a reduced response probability a collision response, which collision response comprises the unique tag code.

44. Tag according to Claim 43, characterised in that the receiving means (65,66) receive a collision command from said detection station, the reducing means (60,61) further reducing the response probability of said tag in response to said collision command, the transmitting means (70,71) transmitting or not transmitting in dependence of a further reduced response probability a collision response, which collision response comprises the unique tag code.

45. Tag according to Claim 43 or 44, characterised in that the receiving means (65,66) receive an identification command from said detection station, the tag comprising increasing means (60,61) for increasing the response probability of said tag in response to said identification command, the transmitting means (70,71) transmitting or not transmitting in dependence of an increased response probability an identification response, which identification response comprises the unique tag code.

46. Tag according to Claim 43, 44 or 45, characterised in that the tag comprises generating means (60,61) for, in response to collision commands and identification commands, generating a random code and comprises comparing means (60,61) for comparing said random code with a setting code for the purpose of determining the response probability, a value of the setting code changing in one sense in response to a collision command, and changing in the other sense in response to an identification command.

47. Tag according to any one of the preceding Claims, characterised in that sleep commands and stop commands comprise a time code, the deactivating means (60,69) deactivating the switching means in response thereto via timing means (69) which can be set by the time code and which are contained in the tag, the time code being representative for a defined time during which the switching means (64) cannot be activated.

48. Tag according to any one of the preceding Claims, characterised in that the deactivating means (60,69) deactivate, if the tag has not received a command during a predetermined period of time, the switching means by further timing means (69) contained in the tag for switching off its battery means (62,63).

## Patentansprüche

1. Verfahren zum Austausch von Informationen zwischen einer Detektionsstation (50, 57) und wenigstens einem Label (60-71) in einem Identifizierungs-Kommunikationssystem, wobei das Label mit Prozessormitteln (60) und mit Batteriemitteln (62, 63) und mit aktivierbaren und nach der Aktivierung deaktivierbaren Schaltmitteln (64, 67, 68, 69) versehen ist, um die besagten Batteriemittel an- und auszuschalten, wobei die Batteriemittel (62, 63) die genannten Prozessormittel (60) im Falle ihrer Anschaltung mit Energie versorgen, wobei das Verfahren die Schritte umfasst
- Übertragen eines Aktivierungssignals von der Detektionsstation zu dem wenigstens einen Label,
- Aktivieren der Schaltmittel (64) in Antwort auf das besagte Aktivierungssignal zum Anschalten der Batteriemittel,
- Übertragen eines einzigartigen Labelcodes, der dem Label zugeordnet ist, dessen Schaltmittel von dem besagten Label aktiviert worden sind, zu der besagten Detektionsstation hin,
dadurch gekennzeichnet, dass das Verfahren weiterhin die Schritte umfasst
- Übertragen eines Schlafbefehls, welcher den besagten einzigartigen Labelcode umfasst, von der Detektionsstation zu dem besagten Label hin, und
- Deaktivieren der Schaltmittel (64) in Antwort auf den Schlafbefehl zum Ausschalten der besagten Batteriemittel.

2. Verfahren nach Anspruch 1, dadurch gekennzeichnet, dass das Verfahren des Übertragens des einzigartigen Labelcodes die Schritte umfasst
- Übertragen eines Identifikationsbefehls von der besagten Detektionsstation zu dem besagten Label hin,
- Übertragen einer Identifikationsantwort, welche den einzigartigen Labelcode umfasst, von dem Label zu der Detektionsstation in Antwort auf den Identifikationsbefehl, und
- Speichern des einzigartigen Labelcodes innerhalb der besagten Detektionsstation.

3. Verfahren nach Anspruch 1 oder 2, dadurch gekennzeichnet, dass das Verfahren die Schritte umfasst
- Übertragen eines Aliasbefehls von der Detektionsstation zu dem Label hin, welcher den einzigartigen Labelcode und einen temporären Code umfasst, der mit dem einzigartigen Labelcode verbunden ist, und
- Speichern des temporären Codes innerhalb des Labels.

4. Verfahren nach Anspruch 3, dadurch gekennzeichnet, dass das Verfahren die Schritte umfasst
- Übertragen eines allgemeinen Stopbefehls, welcher einen standardisierten temporären Code umfasst, von der Detektionsstation zu dem wenigstens einen Label hin, und
- Deaktivieren der Schaltmittel (64) der Label, deren Schaltmittel aktiviert worden sind und die keinen temporären Code zum Ausschalten der Batteriemittel (62, 63) dieser Label gespeichert haben, in Antwort auf den allgemeinen Stopbefehl.

5. Verfahren nach Anspruch 3 oder Anspruch 4, dadurch gekennzeichnet, dass die Kommunikation zwischen der Detektionsstation und dem Label, dessen Schaltmittel aktiviert worden sind, über Auslesebefehle und Schreibbefehle stattfindet, die von der Detektionsstation ausgesandt werden und die den temporären Code des Labels umfassen.

6. Verfahren nach Anspruch 3, 4 oder 5, dadurch gekennzeichnet, dass das Verfahren die Schritte umfasst
- Übertragen eines Stopbefehls mit dem temporären Code des Labels, dessen Schaltmittel (64) aktiviert worden sind, von der Detektionsstation zu dem Label hin, und
- Deaktivieren der Schaltmittel des besagten Labels in Antwort auf den Stopbefehl zum Ausschalten der Batteriemittel (62, 63).

7. Verfahren nach einem der Ansprüche 1 bis 6, dadurch gekennzeichnet, dass das Verfahren die Schritte umfasst
- Übertragen von zumindest zwei Identifikationsantworten, wobei jede einen einzigartigen Labelcode umfasst, der einem Label von zumindest zwei Labeln zugeordnet ist, deren Schaltmittel (64) aktiviert worden sind, in Antwort auf einen Identifikationsbefehl zu der besagten Detektionsstation hin,
- Übertragen eines Kollisionsbefehls von der Detektionsstation zu den besagten Labeln hin,
- Vermindern der Antwortwahrscheinlichkeit von jedem der besagten Label in Antwort auf den Kollisionsbefehl, und
- Übertragen oder Nichtübertragen einer Kollisionsantwort von jedem der besagten Label in Abhängigkeit von der verminderten Antwortwahrscheinlichkeit, wobei die Kollisionsantwort den einzigartigen Labelcode umfasst.

8. Verfahren nach Anspruch 7, dadurch gekennzeichnet, dass das Verfahren die Schritte umfasst
- Empfangen von zumindest zwei Kollisionsantworten bei der Detektionsstation,
- Übertragen eines Kollisionsbefehls von der besagten Detektionsstation zu den besagten Labeln hin,
- weitere Verminderung der Antwortwahrscheinlichkeit von jedem der besagten Label in Antwort auf den besagten Kollisionsbefehl, und
- Übertragen oder Nichtübertragen einer Kollisionsantwort von jedem der besagten Label in Abhängigkeit von einer weiter verminderten Antwortwahrscheinlichkeit, wobei die Kollisionsantwort den einzigartigen Labelcode umfasst.

9. Verfahren nach Anspruch 7, dadurch gekennzeichnet, dass das Verfahren die Schritte umfasst
- Empfangen einer Kollisionsantwort mit dem einzigartigen Labelcode an der besagten Detektionsstation,
- Übertragen eines Schlafbefehls, welcher den einzigartigen Labelcode umfasst, von der Detektionsstation zu dem einen Label hin, und
- Deaktivieren der Schaltmittel des einen Labels in Antwort auf den besagten Schlafbefehl zum Ausschalten der Batteriemittel des einen Labels.

10. Verfahren nach Anspruch 7, dadurch gekennzeichnet, dass das Verfahren die Schritte umfasst
- Empfangen einer Kollisionsantwort mit dem einzigartigen Labelcode an der besagten Erfassungsstation,
- Übertragen eines Aliasbefehls mit dem einzigartigen Labelcode und eines temporären Codes, der mit dem einzigartigen Labelcode verbunden ist, von der besagten Erfassungsstation zu dem einen Label hin, und
- Speichern des temporären Codes innerhalb des besagten Labels.

11. Verfahren nach Anspruch 10, dadurch gekennzeichnet, dass die Kommunikation zwischen der Detektionsstation und dem einen Label über Auslesebefehle und Schreibbefehle stattfindet, die von der Detektionsstation ausgesandt werden und die den temporären Code des einen Labels umfassen.

12. Verfahren nach Anspruch 10 oder 11, dadurch gekennzeichnet, dass das Verfahren die Schritte umfasst
- Übertragen eines Stopbefehls mit dem temporären Code des einen Labels von der besagten Erfassungsstation zu dem einen Label hin, und
- Deaktivieren der Schaltmittel (64) des einen Labels in Antwort auf den Stopbefehl zum Ausschalten der Batteriemittel des einen Labels.

13. Verfahren nach Anspruch 9 oder Anspruch 12, dadurch gekennzeichnet, dass das Verfahren die Schritte umfasst
- Übertragen eines Identifikationsbefehls von der Erfassungsstation zu den Labeln hin, deren Schaltmitteln (64) immer noch aktiviert sind,
- Erhöhen der Antwortwahrscheinlichkeit von jedem der einzelnen Label in Antwort auf den besagten Identifikationsbefehl, und
- Übertragen oder Nichtübertragen einer Identifikationsantwort von jedem der besagten Label in Abhängigkeit von einer erhöhten Antwortwahrscheinlichkeit, wobei die Identifikationsantwort den einzigartigen Labelcode umfasst.

14. Verfahren nach einem der Ansprüche 7 bis 13, dadurch gekennzeichnet, dass ein Label, dessen Schaltmittel (64) aktiviert worden ist, in Antwort auf das Empfangen von Kollisionsbefehlen und Identifkationsbefehlen, einen Zufallszahlencode erzeugt und diesen Zufallszahlencode mit einem gesetzten Code zum Zwecke der Bestimmung der Antwortwahrscheinlichkeit vergleicht, wobei sich der Wert des gesetzten Codes in der einen Richtung in Antwort auf einen Kollisionsbefehl und in der anderen Richtung in Antwort auf einen Identifikationsbefehl ändert.

15. Verfahren nach einem der vorstehenden Ansprüche, dadurch gekennzeichnet, dass die Schlafbefehle und die Stopbefehle einen Zeitcode umfassen, dass das Label, dessen Schaltmittel aktiviert worden sind, seine Schaltmittel in Antwort auf zeitgebenden Mittel (69) deaktiviert, die von dem Zeitcode gesetzt werden können und die in dem Label enthalten sind, wobei der Zeitcode für eine bestimmte Zeit repräsentativ ist, während der die Schaltmittel (64) nicht aktiviert werden können.

16. Verfahren nach einem der vorstehenden Ansprüche, dadurch gekennzeichnet, dass das Label, wenn es keinen Befehl während einer vorbestimmten Zeitdauer erhalten hat, seine Schaltmittel (64) durch weitere zeitgebenden Mittel (69) deaktiviert, die in dem Label erhalten sind, um seine Batteriemittel auszuschalten.

17. System mit zumindest einer Detektionsstation (50 bis 57) und wenigstens einem Label (60 bis 71), wobei das mindestens eine Label mit Prozessormitteln (60) und mit Batteriemitteln (62, 63) und mit aktivierbaren und nach der Aktivierung deaktivierbaren Schaltmitteln (64, 67, 68, 69) zum Ein- und Ausschalten der besagten Batteriemittel versehen ist, wobei die Batteriemittel (62, 63) im Falle ihres Anschaltens den besagten Prozessormitteln (60) Energie liefern, wobei das wenigstens eine Label weiterhin mit Aktivierungsmitteln (68) zur Aktivierung der Schaltmittel in Antwort auf ein Aktivierungssignal zum Schalten der besagten Batteriemittel versehen ist, und das dritte Übertragungsmittel (70, 71) vorgesehen sind, um einen einzigartigen Labelcode, der dem Label zugeordnet ist, dessen Schaltmittel aktiviert worden sind, zu der wenigstens einen Detektionsstation zu übertragen, wobei die zumindest eine Detektionsstation erste Übertragungsmittel (54, 55) zur Übertragung des besagten Aktivierungssignals zu dem wenigstens einen Label hin umfasst, dadurch gekennzeichnet, dass die besagte Detektionsstation zweite Übertragungsmittel (54, 55) aufweist, um einen Schlafbefehl, welcher den besagten einzigartigen Labelcode umfasst, zu den besagten Labeln, zu übertragen, wobei das besagte Label weiterhin Deaktivierungsmittel (60, 69) zur Deaktivierung der Schaltmittel (64) in Antwort auf den besagten Schlafbefehl auf das Ausschalten der Batteriemittel umfasst.

18. System nach Anspruch 17, dadurch gekennzeichnet, dass die Detektionsstation umfasst
- vierte Übertragungsmittel (54, 55) zur Übertragung eines Identifikationsbefehls an das besagte Label, und
- erste Speichermittel (51) zum Speichern des besagten einzigartigen Labelcodes innerhalb der Detektionsstation, wobei das Label umfasst
- fünfte Übertragungsmittel (70, 71) zum Übertragen einer Identifikationsantwort, die den besagten einzigartigen Labelcode umfasst, zu der besagten Detektionsstation in Antwort auf diesen Identifikationsbefehl.

19. System nach Anspruch 17 oder Anspruch 18, dadurch gekennzeichnet, dass die Detektionsstation umfasst
- sechste Übertragungsmittel (54, 55) zur Übertragung eines Aliasbefehls, welcher den besagten einzigartigen Labelcode und einen temporären Code umfasst, der mit dem einzigartigen Labelcode verbunden ist, zu dem Label hin,
wobei das Label umfasst
- zweite Speichermittel (61) zum Speichern des besagten temporären Codes innerhalb des Labels.

20. System nach Anspruch 19, dadurch gekennzeichnet, dass die Detektionsstation umfasst
- Aussendungsmittel (54, 55) zum Aussenden von Auslesebefehlen und Schreibbefehlen, die den temporären Code des Labels zum Zwecke der Kommunikation mit dem besagten Label speichern.

21. System gemäss Anspruch 17, 18, 19 oder 20, dadurch gekennzeichnet, dass die Detektionsstation umfasst
- erste Detektionsmittel (50, 51) zum Detektieren von wenigstens zwei Identifikationsantworten, welche jeweils einen einzigartigen Labelcode umfassen, der einem Label zugeordnet ist und die jeweils von einem Label ausgehen, dessen Schaltmittel aktiviert worden sind,
- siebte Übertragungsmittel (54, 55) zum Übertragen eines Kollisionsbefehls zu den besagten Labeln hin,
wobei jeder Label umfasst
- Verminderungsmittel (60, 61) zum Vermindern der Antwortwahrscheinlichkeit des besagten Labels in Antwort auf den besagten Kollisionsbefehl, und
- achte Übertragungsmittel (70, 71) zum Übertragen oder Nichtübertragen einer Kollisionsantwort in Abhängigkeit von einer verminderten Antwortwahrscheinlichkeit, wobei die Kollisionsantwort den einzigartigen Labelcode umfasst.

22. System nach Anspruch 21, dadurch gekennzeichnet, dass die Detektionsstation umfasst
- zweite Detektionsmittel (50, 51) zum Detektieren von wenigstens zwei Kollisionsantworten in der besagten Detektionsstation,
- neunte Übertragungsmittel (54, 55) zum Übertragen eines Kollisionsbefehls zu den besagten Labeln hin,
wobei jedes der besagten Label umfasst
- weitere Verminderungsmittel (60, 61) zur weiteren Verminderung der Antwortwahrscheinlichkeit für jedes der besagten Label in Antwort auf den besagten Kollisionsbefehl, und
- zehnte Übertragungsmittel (70, 71) zum Übertragen oder Nichtübertragen einer Kollisionsantwort in Abhängigkeit von einer weiter verminderten Antwortwahrscheinlichkeit, wobei die Kollisionsantwort den einzigartigen Labelcode umfasst.

23. System nach Anspruch 22, dadurch gekennzeichnet, dass die Detektionsstation umfasst,
- elfte Übertragungsmittel (54, 55) zum Übertragen eines Identifikationsbefehls zu den Labeln hin, deren Schaltmittel immer noch aktiviert sind,
wobei jedes der besagten Label umfasst
- Erhöhungsmittel (60, 61) zum Erhöhen der Antwortwahrscheinlichkeit in Antwort auf den besagten Identifikationsbefehl, und
- zwölfte Übertragungsmittel (70, 71) zum Übertragen oder Nichtübertragen einer Identifikationsantwort in Abhängigkeit von einer erhöhten Antwortwahrscheinlichkeit, wobei die Identifikationsantwort den einzigartigen Labelcode umfasst.

24. Detektionsstation (50 bis 57) zum Einsatz in einem Identifikations-Kommunikationssystem mit wenigstens einem Label (60-71), wobei das wenigstens eine Label mit Prozessormitteln (60) und mit Batteriemitteln (62, 63) und mit aktivierbaren und nach der Aktivierung deaktivierbaren Schaltmitteln (64, 67, 68, 69) versehen ist, um die besagten Batteriemittel ein- und auszuschalten, wobei die Batteriemittel (62, 63) den besagen Prozessormitteln (60) im Falle deren Anschaltung Energie zuführen, wobei die Detektionsstation Übertragungsmittel (54, 55) zur Übertragung eines Aktivierungssignals an das wenigstens eine Label zur Aktivierung der Schaltmittel in Antwort auf das besagte Aktivierungssignal zum Anschalten der Batteriemittel und Empfangsmittel (56, 57) umfasst, um einen einzigartigen Labelcode zu empfangen, der einem Label zugeordnet ist, dessen Schaltmittel aktiviert worden sind, dadurch gekennzeichnet, dass die Detektionsstation weiterhin Übertragungsmittel (54, 55) umfasst, um einen Schlafbefehl, der den besagten einzigartigen Labelcode aufweist, der dem Label zugeordnet ist, dessen Schaltmittel aktiviert worden sind, zu dem besagten Label hin zu übertragen, um die Schaltmittel zum Ausschalten der Batteriemittel zu deaktivieren.

25. Detektionsstation nach Anspruch 24, dadurch gekennzeichnet, dass die Übertragungsmittel (54, 55) einen Identifikationsbefehl zu dem besagten Label hin übertragen, wobei das besagte Label in Antwort auf den besagten Identifikationsbefehl eine Identifikationsantwort, welche den besaqten einzigartigen Labelcode umfasst, zu der Detektionsstation hin überträgt, wobei die Detektionsstation Speichermittel (51) zum Speichern des besagten einzigartigen Labelcodes innerhalb der Detektionsstation umfasst.

26. Detektionsstation nach Anspruch 24 oder 25, dadurch gekennzeichnet, dass die Übertragungsmittel (54, 55) einen Aliasbefehl übertragen, welcher den einzigartigen Labelcode und einen temporären Code umfasst, der dem einzigartigen Labelcode des besagten Labels zugeordnet ist.

27. Detektionsstation nach Anspruch 26, dadurch gekennzeichnet, dass die Übertragungsmittel (54, 55) einen allgemeinen Stopbefehl zu dem besagten wenigstens einen Label hin übertragen, welcher einen allgemeinen temporären Code umfasst, um in Antwort auf den allgemeinen Stopbefehl die Schaltmittel (64) der Label zu deaktivieren, deren Schaltmittel aktiviert worden sind und die keinen temporären Code gespeichert haben, um die Batteriemittel (62, 63) dieser Label auszuschalten.

28. Detektionsstation nach Anspruch 26 oder 27, dadurch gekennzeichnet, dass die Kommunikation zwischen der Detektionsstation und den Labeln, deren Schaltmittel aktiviert worden sind, über Auslesebefehle und Schreibbefehle stattfindet, die von der Detektionsstation ausgesandt werden und die den temporären Code des Labels umfassen.

29. Detektionsstation nach einem der Ansprüche 26, 27 oder 28, dadurch gekennzeichnet, dass die Übertragungsmittel (54, 55) einen Stopbefehl, welcher den temporären Code des Labels umfasst, dessen Schaltmittel aktiviert worden sind, zu dem Label hin zu übertragen, um die Schaltmittel des besagten Labels in Antwort auf den Stopbefehl zum Ausschalten der Batteriemittel zu deaktivieren.

30. Detektionsstation nach einem der Ansprüche 24 bis 29, dadurch gekennzeichnet, dass die Detektionsstation Detektionsmittel (50, 51) zum Detektieren von wenigstens zwei Identifikationsantworten umfasst, welche jeweils einen einzigartigen Labelcode umfassen, der einem Label zugeordnet ist und von wenigstens von zwei Labeln ausgeht, deren Schaltmittel aktiviert worden sind, dass die Übertragungsmittel (54, 55) einen Kollisionsbefehl zu den besagten Labeln übertragen, um die Antwortwahrscheinlichkeit von jedem einzelnen der besagten Label in Antwort auf den besagten Kollisionsbefehl zu vermindern, wodurch jedes der besagten Label eine Kollisionsantwort in Abhängigkeit von einer verminderten Antwortwahrscheinlichkeit überträgt oder nicht überträgt, wobei die Kollisionsantwort den einzigartigen Labelcode umfasst.

31. Detektionsstation nach Anspruch 30, dadurch gekennzeichnet, dass die Detektionsmittel (50, 51) mindestens zwei Kollisionsantworten detektieren, dass die Übertragungsmittel (54, 55) einen Kollisionsbefehl an die besagten Label überträgt, um die Antwortwahrscheinlichkeit von jedem der Label in Antwort auf den besagten Kollisionsbefehl weiter zu vermindern, wodurch jedes der besagten Label eine Kollisionsantwort in Abhängigkeit von einer weiter verminderten Antwortwahrscheinlichkeit überträgt oder nicht überträgt, wobei die Kollisionsantwort den einzigartigen Labelcode umfasst.

32. Detektionsstation nach Anspruch 30, dadurch gekennzeichnet, dass die Detektionsmittel (50, 51) eine Kollisionsantwort detektieren, die einen einzigartigen Labelcode umfasst, dass die Übertragungsmittel einen Schlafbefehl, welcher den einzigartigen Labelcode umfasst, zu dem einen Label hin übertragen, um die Schaltmittel (64) des einen Labels in Antwort auf den besagten Schlafbefehl zum Ausschalten der Batteriemittel (62, 63) des einen Labels zu deaktivieren.

33. Detektionsstation nach Anspruch 30, dadurch gekennzeichnet, dass die Detektionsmittel (50, 51) eine Kollisionsantwort detektieren, die einen einzigartigen Labelcode umfassen, dass die Übertragungsmittel (54, 55) einen Aliasbefehl, welcher den einzigartigen Labelcode und einen temporären Code umfasst, der dem einzigartigen Labelcode zugeordnet ist, zu dem einen Label hin übertragen, um den temporären Code innerhalb des Labels zu speichern.

34. Detektionsstation nach Anspruch 33, dadurch gekennzeichnet, dass die Kommunikation zwischen der Detektionsstation und dem einen Label über Auslesebefehle und Schreibbefehle stattfindet, die von der Detektionsstation ausgehen und die den temporären Code des einen Labels umfassen.

35. Detektionsstation nach Anspruch 33 oder 34, dadurch gekennzeichnet, dass die Übertragungsmittel (54, 55) einen Stopbefehl, welcher den temporären Code des einen Labels umfasst, zu dem einen Label hin übertragen, um die Schaltmittel (64) des einen Labels in Antwort auf den Stopbefehl zu deaktivieren, um die Batteriemittel (62, 63) des einen Labels auszuschalten.

36. Detektionsstation nach einem der Ansprüche 32 bis 35, dadurch gekennzeichnet, dass die Übertragungsmittel (54, 55) einen Identifikationsbefehl zu den Labeln hin übertragen, deren Schaltmittel (64) immer noch aktiviert sind, um die Antwortwahrscheinlichkeit von jedem der besagten Label zu erhöhen, um auf den besagten Identifikationsbefehl zu antworten, wodurch jedes der einzelnen Label eine Identifikationsantwort in Abhängigkeit von der erhöhten Antwortwahrscheinlichkeit überträgt oder nicht überträgt, wobei die Identifikationsantwort den einzigartigen Labelcode umfasst.

37. Label (60-71) zum Einsatz in einem Identifikations-Kommunikationssystem mit einer Detektionsstation (50-57), wobei das Label mit Prozessormitteln (60) und mit Batteriemitteln (62, 63) und mit aktivierbaren und nach der Aktivierung deaktivierbaren Schaltmitteln (64, 67, 68, 69) zum Ein- und Ausschalten der besagten Batteriemittel versehen ist, wobei die Batteriemittel (62, 63) den besagten Prozessormitteln (60) im Falle ihres Anschaltens Energie zuführen, und wobei das Label weiterhin Empfangsmittel (65, 66) zum Empfangen eines Aktivierungssignals von der Detektionsstation, Aktivierungsmittel (68) zum Aktivieren der Schaltmittel (64) in Antwort auf das besagte Aktivierungssignal zum Einschalten der besagten Batteriemittel (62, 63) und Übertragungsmittel (70, 71) zur Übertragung eines einzigartigen Labelcodes zu der besagten Detektionsstation umfasst, wobei der einzigartige Labelcode dem Label zugeordnet ist, dessen Schaltmittel aktiviert worden sind, dadurch gekennzeichnet, dass das Label weiterhin Empfangsmittel (65, 66) zum Empfang eines Schlafbefehls mit dem besagten einzigartigen Labelcode von der besagten Detektionsstation und Deaktivierungsmittel (60, 69) zur Deaktivierung der Schaltmittel (64) in Antwort auf den besagten Schlafbefehl zum Ausschalten der besagten Batteriemittel umfasst.

38. Label nach Anspruch 37, dadurch gekennzeichnet, dass die Empfangsmittel (65, 66) von der besagten Detektionsstation einen Identifikationsbefehl empfangen, und dass die Übertragungsmittel (70, 71) in Antwort auf den Identifikationsbefehl zum Speichern des besagten einzigartigen Labelcodes innerhalb der Detektionsstation eine Identifikationsantwort zu der besagten Detektionsstation hin übertragen, welche den besagten einzigartigen Labelcode umfasst.

39. Label nach Anspruch 37 oder Anspruch 38, dadurch gekennzeichnet, dass die Empfangsmittel (65, 66) einen Aliasbefehl von der Erfassungsstation empfangen, welcher den besagten einzigartigen Labelcode und einen temporären Code umfasst, der mit dem einzigartigen Labelcode verbunden ist, wobei das Label Speichermittel (61) zum Speichern des besagten temporären Codes innerhalb des Labels umfasst.

40. Label nach Anspruch 39, dadurch gekennzeichnet, dass die Empfangsmittel (65, 66) einen allgemeinen Stopbefehl von der Detektionsstation empfangen, welcher einen allgemeinen temporären Code umfasst, um in Antwort auf den allgemeinen Stopbefehl die Schaltmittel (64) des Labels zu deaktivieren im Falle, dass die Schaltmittel aktiviert worden sind, und im Falle, dass es keinen temporären Code zum Ausschalten der Batteriemittel (62, 63) dieses Labels gespeichert hat.

41. Label nach Anspruch 39 oder 40, dadurch gekennzeichnet, dass die Kommunikation zwischen der Detektionsstation und dem Label, dessen Schaltmittel (64) aktiviert worden sind, über Auslesebefehle und Schreibbefehle stattfindet, die von der Detektionsstation ausgesandt werden und den temporären Code des Labels umfassen.

42. Label nach Anspruch 39, 40 oder 41, dadurch gekennzeichnet, dass die Empfangsmittel (65, 66) einen Stopbefehl von der besagten Detektionsstation empfangen, welcher den temporären Code des Labels umfasst, dessen Schaltmittel (64) aktiviert worden sind, um die Schaltmittel des besagten Labels in Antwort auf den Stopbefehl zum Ausschalten der Batteriemittel (62, 63) zu deaktivieren.

43. Label nach einem der Ansprüche 37 bis 42, dadurch gekennzeichnet, dass die Empfangsmittel (65, 66) einen Kollisionsbefehl von der besagten Detektionsstation empfangen, dass das Label Verminderungsmittel (60, 61) zur Verminderung der Antwortwahrscheinlichkeit des besagten Labels in Antwort auf den besagten Kollisionsbefehl umfassen, und dass die Übertragungsmittel (70, 71) eine Kollisionsantwort in Abhängigkeit von einer verminderten Antwortwahrscheinlichkeit übertragen oder nicht übertragen, wobei die Kollisionsantwort den einzigartigen Labelcode umfasst.

44. Label nach Anspruch 43, dadurch gekennzeichnet, dass die Empfangsmittel (65, 66) einen Kollisionsbefehl von der besagten Detektionsstation empfangen, dass die Verminderungsmittel (60, 61) die Antwortwahrscheinlichkeit des besagten Labels in Antwort auf den besagten Kollisionsbefehl weiter vermindern, und dass die Übertragungsmittel (70, 71) eine Kollisionsantwort in Abhängigkeit von einer weiter verminderten Antwortwahrscheinlichkeit übertragen oder nicht übertragen, wobei die Kollisionsantwort den einzigartigen Labelcode umfasst.

45. Label nach Anspruch 43 oder 44, dadurch gekennzeichnet, dass die Empfangsmittel (65, 66) einen Identifikationsbefehl von der Detektionsstation empfangen, dass das Label Erhöhungsmittel (60, 61) zur Erhöhung der Antwortwahrscheinlichkeit des besagten Labels in Antwort auf den besagten Identifikationsbefehl aufweisen, dass die Übertragungsmittel (70, 71) eine Identifikationsantwort in Abhängigkeit von einer erhöhten Antwortwahrscheinlichkeit übertragen oder nicht übertragen, wobei die Identifikationsantwort den einzigartigen Labelcode umfasst.

46. Label nach Anspruch 43, 44 oder 45, dadurch gekennzeichnet, dass das Label Erzeugungsmittel (60, 61) zur Erzeugung eines Zufallszahlencodes in Antwort auf Kollisionsbefehle und Identifikationsbefehle und Vergleichermittel (60, 61) aufweist, um den besagten Zufallszahlencode mit einem gesetzten Code zum Zwecke der Bestimmung der Antwortwahrscheinlichkeit vergleicht, wobei sich der Wert des gesetzten Codes in einer Richtung in Antwort auf einen Kollisionsbefehl und in der anderen Richtung in Antwort auf einen Identifikationsbefehl verändert.

47. Label nach einem der vorstehenden Ansprüche 37 bis 46, dadurch gekennzeichnet, dass Schlafbefehle und Stopbefehle einen Zeitcode umfassen, dass die Deaktivierungsmittel (60, 69) die Schaltmittel in Antwort auf diese über zeitgebende Mittel (69) deaktivieren, die durch den Zeitcode gesetzt werden können und die in dem Label enthalten sind, wobei der Zeitcode für eine bestimmte Zeit kennzeichnend ist, während der die Schaltmittel (64) nicht aktiviert werden können.

48. Label nach einem der vorstehenden Ansprüche 37 bis 47, dadurch gekennzeichnet, dass die Deaktivierungsmittel (60, 69) die Schaltmittel durch ein weiteres zeitgebendes Mittel (69), welches in dem Label zum Ausschalten der Batteriemittel (62, 63) enthalten ist, deaktivieren, falls das Label keinen Befehl innerhalb einer vorbestimmten Zeitdauer erhalten hat.

## Revendications

1. Procédé pour échanger de l'information entre une station de détection (50-57) et au moins une étiquette (60-71) dans un système d'identification/communication, cette étiquette comportant des moyens de traitement (60) et une source d'énergie continue (62, 63) et des moyens de commutation (64, 67, 68, 69) pouvant être activés, et pouvant être désactivés après l'activation, pour commuter en fonction et hors fonction la source d'énergie continue, cette source d'énergie continue (62, 63) fournissant de l'énergie aux moyens de traitement (60) dans le cas où elle est en fonction, comprenant les étapes suivantes :
- on émet un signal d'activation à partir de la station de détection vers au moins une étiquette,
- on active les moyens de commutation (64) sous l'effet du signal d'activation, pour mettre en fonction la source d'énergie continue,
- on émet à partir de l'étiquette, vers la station de détection, un code d'étiquette spécifique associé à l'étiquette dont les moyens de commutation ont été activés,
caractérisé en ce que le procédé comprend en outre les étapes suivantes:
- on émet à partir de la station de détection vers l'étiquette un ordre de sommeil comprenant le code d'étiquette spécifique, et
- on désactive les moyens de commutation (64) sous l'effet de l'ordre de sommeil, pour mettre hors fonction la source d'énergie.

2. Procédé selon la revendication 1, caractérisé en ce que l'étape d'émission du code d'étiquette spécifique comprend les étapes suivantes :
- on émet un ordre d'identification à partir de la station de détection vers l'étiquette,
- on émet à partir de l'étiquette, vers la station de détection, une réponse d'identification comprenant le code d'étiquette spécifique, en réponse à cet ordre d'identification, et
- on enregistre le code d'étiquette spécifique dans la station de détection.

3. Procédé selon la revendication 1 ou 2, caractérisé en ce qu'il comprend les étapes suivantes :
- on émet à partir de la station de détection, vers l'étiquette, un ordre de pseudonyme comprenant le code d'étiquette spécifique et un code temporaire qui est lié au code d'étiquette spécifique,
- on enregistre le code temporaire dans l'étiquette.

4. Procédé selon la revendication 3, caractérisé en ce qu'il comprend les étapes suivantes :
- on émet à partir de la station de détection, vers l'étiquette ou les étiquettes, un ordre d'arrêt général comprenant un code temporaire standard, et
- en réponse à cet ordre d'arrêt général, on désactive les moyens de commutation (64) d'étiquettes dont les moyens de commutation ont été activés et qui n'ont pas enregistré un code temporaire, pour mettre hors fonction la source d'énergie continue (62, 63) de ces étiquettes.

5. Procédé selon la revendication 3 ou 4, caractérisé en ce que la communication entre la station de détection et l'étiquette dont les moyens de commutation ont été activés a lieu par l'intermédiaire d'ordres de lecture et d'ordres d'écriture qui sont émis par la station de détection et qui comprennent le code temporaire de l'étiquette.

6. Procédé selon la revendication 3, 4 ou 5, caractérisé en ce qu'il comprend les étapes suivantes :
- on émet à partir de la station de détection, vers l'étiquette, un ordre d'arrêt comprenant le code temporaire de l'étiquette dont les moyens de commutation (64) ont été activés, et
- on désactive les moyens de commutation de cette étiquette sous l'effet de l'ordre d'arrêt, pour mettre hors fonction la source d'énergie continue (62, 63).

7. Procédé selon la revendication 1, 2, 3, 4, 5 ou 6, caractérisé en ce qu'il comprend les étapes suivantes :
- on émet vers la station de détection, en réponse à un ordre d'identification, au moins deux réponses d'identification comprenant chacune un code d'étiquette spécifique associé à une étiquette parmi au moins deux étiquettes dont les moyens de commutation (64) ont été activés,
- on émet un ordre de collision, à partir de la station de détection, vers les étiquettes,
- on réduit la probabilité de réponse de chacune des étiquettes sous l'effet de l'ordre de collision, et
- chacune des étiquettes émet ou n'émet pas une réponse de collision, sous la dépendance d'une probabilité de réponse réduite, cette réponse de collision comprenant le code d'étiquette spécifique.

8. Procédé selon la revendication 7, caractérisé en ce qu'il comprend les étapes suivantes :
- on reçoit au moins deux réponses de collision à la station de détection,
- on émet un ordre de collision à partir de la station de détection, vers les étiquettes,
- on réduit de façon supplémentaire la probabilité de réponse de chacune des étiquettes, sous l'effet de l'ordre de collision, et
- chacune des étiquettes émet ou n'émet pas une réponse de collision, sous la dépendance d'une probabilité réduite de façon supplémentaire, cette réponse de collision comprenant le code d'étiquette spécifique.

9. Procédé selon la revendication 7, caractérisé en ce qu'il comprend les étapes suivantes :
- on reçoit à la station de détection une réponse de collision comprenant un code d'étiquette spécifique,
- on émet à partir de la station de détection, vers l'étiquette considérée, un ordre de sommeil comprenant le code d'étiquette spécifique, et
- on désactive les moyens de commutation de l'étiquette considérée, sous l'effet de l'ordre de sommeil, pour mettre hors fonction la source d'énergie continue de l'étiquette considérée.

10. Procédé selon la revendication 7, caractérisé en ce qu'il comprend les étapes suivantes :
- on reçoit à la station de détection une réponse de collision comprenant un code d'étiquette spécifique,
- on émet à partir de la station de détection, vers l'étiquette considérée, un ordre de pseudonyme comprenant le code d'étiquette spécifique et un code temporaire qui est lié au code d'étiquette spécifique, et
- on enregistre le code temporaire dans l'étiquette.

11. Procédé selon la revendication 10, caractérisé en ce que la communication entre la station de détection et l'étiquette considérée a lieu par l'intermédiaire d'ordres de lecture et d'ordres d'écriture qui sont émis par la station de détection et qui comprennent le code temporaire de l'étiquette considérée.

12. Procédé selon la revendication 10 ou 11, caractérisé en ce qu'il comprend les étapes suivantes :
- on émet à partir de la station de détection, vers l'étiquette considérée, un ordre d'arrêt comprenant le code temporaire de l'étiquette considérée, et
- on désactive les moyens de commutation (64) de l'étiquette considérée, sous l'effet de l'ordre d'arrêt, pour mettre hors fonction la source d'énergie continue de l'étiquette considérée.

13. Procédé selon la revendication 9 ou 12, caractérisé en ce qu'il comprend les étapes suivantes :
- on émet un ordre d'identification à partir de la station de détection, vers les étiquettes dont les moyens de commutation (64) sont encore activés,
- on augmente la probabilité de réponse de chacune des étiquettes sous l'effet de cet ordre d'identification, et
- chacune des étiquettes émet ou n'émet pas une réponse d'identification sous la dépendance d'une probabilité de réponse accrue, cette réponse d'identification comprenant le code d'étiquette spécifique.

14. Procédé selon la revendication 7, 8, 9, 10, 11, 12 ou 13, caractérisé en ce qu'une étiquette dont les moyens de commutation (64) ont été activés réagit à la réception d'ordres de collision et d'ordres d'identification en générant un code aléatoire et en comparant ce code aléatoire avec un code de réglage, dans le but de déterminer la probabilité de réponse, une valeur du code de réglage changeant dans un sens sous l'effet d'un ordre de collision, et changeant dans l'autre sens sous l'effet d'un ordre d'identification.

15. Procédé selon l'une quelconque des revendications précédentes, caractérisé en ce que des ordres de sommeil et des ordres d'arrêt comprennent un code de temps, l'étiquette dont les moyens de commutation ont été activés désactivant ses moyens de commutation sous l'effet de ce code, par l'intermédiaire de moyens temporisateurs (69) qui peuvent être réglés par le code de temps et qui sont contenus dans l'étiquette, le code de temps étant représentatif d'une durée définie pendant laquelle les moyens de commutation (64) ne peuvent pas être activés.

16. Procédé selon l'une quelconque des revendications précédentes, caractérisé en ce que si l'étiquette n'a pas reçu un ordre pendant une durée prédéterminée, elle désactive ses moyens de commutation (64) par l'intermédiaire de moyens temporisateurs supplémentaires (69) qui sont contenus dans l'étiquette, pour mettre hors fonction sa source d'énergie continue.

17. Système comprenant au moins une station de détection (50-57) et au moins une étiquette (60-71), cette étiquette, ou chacune d'elles, comportant des moyens de traitement (60) et une source d'énergie continue (62, 63), et des moyens de commutation (64, 67, 68, 69) pouvant être activés, et pouvant être désactivés après l'activation, pour commuter en fonction et hors fonction la source d'énergie continue, cette source d'énergie continue (62, 63) fournissant de l'énergie aux moyens de traitement (60) dans le cas où elle est mise en fonction, l'étiquette ou chacune d'elles comportant en outre des moyens d'activation (68) pour activer les moyens de commutation sous l'effet d'un signal d'activation, pour mettre en fonction la source d'énergie continue, et des troisièmes moyens d'émission (70, 71) pour émettre vers la station de détection, ou chacune d'elles, un code d'étiquette spécifique qui est associé à l'étiquette dont les moyens de commutation ont été activés, la station de détection, ou chacune d'elles, comprenant des premiers moyens d'émission (54, 55) pour émettre le signal d'activation vers l'étiquette ou chacune d'elles, caractérisé en ce que la station de détection comprend en outre des seconds moyens d'émission (54, 55) pour émettre vers l'étiquette un ordre de sommeil comprenant le code d'étiquette spécifique, l'étiquette comprenant en outre des moyens de désactivation (60, 69) pour désactiver les moyens de commutation (64) sous l'effet de l'ordre de sommeil, pour mettre hors fonction la source d'énergie continue.

18. Système selon la revendication 17, caractérisé en ce que la station de détection comprend :
- des quatrièmes moyens d'émission (54, 55) pour émettre un ordre d'identification vers l'étiquette, et
- des premiers moyens d'enregistrement (51) pour enregistrer le code d'étiquette spécifique dans la station de détection,
l'étiquette comprenant :
- des cinquièmes moyens d'émission (70, 71) pour émettre vers la station de détection, sous l'effet de cet ordre d'identification, une réponse d'identification comprenant le code d'étiquette spécifique.

19. Système selon la revendication 17 ou 18, caractérisé en ce que la station de détection comprend :
- des sixièmes moyens d'émission (54, 55) pour émettre vers l'étiquette un ordre de pseudonyme comprenant le code d'étiquette spécifique et un code temporaire qui est lié au code d'étiquette spécifique,
l'étiquette comprenant :
- des seconds moyens d'enregistrement (61) pour enregistrer le code temporaire dans l'étiquette.

20. Système selon la revendication 19, caractérisé en ce que la station de détection comprend :
- des moyens d'émission (54, 55) pour émettre des ordres de lecture et des ordres d'écriture qui comprennent le code temporaire de l'étiquette, dans le but de communiquer avec cette étiquette.

21. Système selon la revendication 17, 18, 19 ou 20, caractérisé en ce que la station de détection comprend :
- des premiers moyens de détection (50, 51) pour détecter au moins deux réponses d'identification, comprenant chacune un code d'étiquette spécifique associé à une étiquette et provenant chacune d'une étiquette dont les moyens de commutation ont été activés,
- des septièmes moyens d'émission (54, 55) pour émettre un ordre de collision vers les étiquettes,
chacune des étiquettes comprenant
- des moyens de réduction (60, 61) pour réduire la probabilité de réponse de l'étiquette, sous l'effet de l'ordre de collision, et
- des huitièmes moyens d'émission (70, 71) pour émettre ou ne pas émettre une réponse de collision, sous la dépendance d'une probabilité de réponse réduite, cette réponse de collision comprenant le code d'étiquette spécifique.

22. Système selon la revendication 21, caractérisé en ce que la station de détection comprend :
- des seconds moyens de détection (50, 51) pour détecter au moins deux réponses de collision à la station de détection,
- des neuvièmes moyens d'émission (54, 55) pour émettre un ordre de collision vers les étiquettes,
chacune des étiquettes comprenant :
- des moyens de réduction supplémentaires (60, 61) pour réduire de façon supplémentaire la probabilité de réponse de chacune des étiquettes, sous l'effet de l'ordre de collision, et
- des dixièmes moyens d'émission (70, 71) pour émettre ou ne pas émettre une réponse de collision, sous la dépendance d'une probabilité de réponse réduite de façon supplémentaire, cette réponse de collision comprenant le code d'étiquette spécifique.

23. Système selon la revendication 22, caractérisé en ce que la station de détection comprend :
- des onzièmes moyens d'émission (54, 55) pour émettre un ordre d'identification vers les étiquettes dont les moyens de commutation sont encore activés,
chacune des étiquettes comprenant :
- des moyens d'augmentation (60, 61) pour augmenter la probabilité de réponse sous l'effet de l'ordre d'identification, et
- des douzièmes moyens d'émission (70, 71) pour émettre ou ne pas émettre une réponse d'identification, sous la dépendance d'une probabilité de réponse accrue, cette réponse d'identification comprenant le code d'étiquette spécifique.

24. Station de détection (50-57) prévue pour l'utilisation dans un système d'identification/communication comprenant au moins une étiquette (60-71), cette étiquette, ou ces étiquettes, comprenant des moyens de traitement (60) et une source d'énergie continue (62, 63), et des moyens de commutation (64, 67, 68, 69) pouvant être activés, et pouvant être désactivés après l'activation, pour commuter en fonction et hors fonction la source d'énergie continue, cette source d'énergie continue (62, 63) fournissant de l'énergie aux moyens de traitement (60) dans le cas où elle est en fonction, la station de détection comprenant des moyens d'émission (54, 55) pour émettre un signal d'activation vers l'étiquette ou les étiquettes, pour activer les moyens de commutation sous l'effet du signal d'activation, de façon à mettre en fonction la source d'énergie continue, et des moyens de réception (56, 57) pour recevoir un code d'étiquette spécifique qui est associé à une étiquette dont les moyens de commutation ont été activés, caractérisée en ce que la station de détection comprend en outre des moyens d'émission (54, 55) pour émettre vers l'étiquette un ordre de sommeil comprenant le code d'étiquette spécifique qui est associé à l'étiquette dont les moyens de commutation ont été activés, afin de désactiver les moyens de commutation pour mettre hors fonction la source d'énergie continue.

25. Station de détection selon la revendication 24, caractérisée en ce que les moyens d'émission (54, 55) émettent un ordre d'identification vers l'étiquette, et cette étiquette réagit à l'ordre d'identification en émettant vers la station de détection une réponse d'identification comprenant le code d'étiquette spécifique, la station de détection comprenant des moyens d'enregistrement (51) pour enregistrer le code d'étiquette spécifique dans la station de détection.

26. Station de détection selon la revendication 24 ou 25, caractérisée en ce que les moyens d'émission (54, 55) émettent vers l'étiquette un ordre de pseudonyme comprenant le code d'étiquette spécifique et un code temporaire qui est lié au code d'étiquette spécifique.

27. Station de détection selon la revendication 26, caractérisée en ce que les moyens d'émission (54, 55) émettent vers l'étiquette ou les étiquettes un ordre d'arrêt général comprenant un code temporaire standard, pour désactiver, sous l'effet de cet ordre d'arrêt général, les moyens de commutation (64) d'étiquette dont les moyens de commutation ont été activés et qui n'ont pas enregistré un code temporaire pour mettre hors fonction la source d'énergie continue (62, 63) de ces étiquettes.

28. Station de détection selon la revendication 26 ou 27, caractérisée en ce que la communication entre la station de détection et l'étiquette dont les moyens de commutation ont été activés a lieu par l'intermédiaire d'ordres de lecture et d'ordres d'écriture qui sont émis par la station de détection et qui comprennent le code temporaire de l'étiquette.

29. Station de détection selon la revendication 26, 27 ou 28, caractérisée en ce que les moyens d'émission (54, 55) émettent vers l'étiquette un ordre d'arrêt comprenant le code temporaire de l'étiquette dont les moyens de commutation ont été activés, pour désactiver les moyens de commutation de cette étiquette sous l'effet de l'ordre d'arrêt, de façon à mettre hors fonction la source d'énergie continue.

30. Station de détection selon la revendication 24, 25, 26, 27, 28 ou 29, caractérisée en ce que cette station de détection comprend des moyens de détection (50, 51) pour détecter au moins deux réponses d'identification, comprenant chacune code d'étiquette spécifique associé à une étiquette et provenant d'au moins deux étiquettes dont les moyens de commutation ont été activés, les moyens d'émission (54, 55) émettant un ordre de collision vers les étiquettes pour réduire la probabilité de réponse de chacune des étiquettes, sous l'effet de l'ordre de collision, grâce à quoi chacune des étiquettes émet ou n'émet pas une réponse de collision, sous la dépendance d'une probabilité de réponse réduite, cette réponse de collision comprenant le code d'étiquette spécifique.

31. Station de détection selon la revendication 30, caractérisée en ce que les moyens de détection (50, 51) détectent au moins deux réponses de collision, les moyens d'émission (54, 55) émettant un ordre de collision vers les étiquettes pour réduire de façon supplémentaire la probabilité de réponse de chacune des étiquettes, sous l'effet de l'ordre de collision, grâce à quoi chacune des étiquettes émet ou n'émet pas une réponse de collision, sous la dépendance d'une probabilité de réponse réduite de façon supplémentaire, cette réponse de collision comprenant le code d'étiquette spécifique.

32. Station de détection selon la revendication 30, caractérisée en ce que les moyens de détection (50, 51) détectent une réponse de collision comprenant un code d'étiquette spécifique, les moyens d'émission émettant vers l'étiquette considérée un ordre de sommeil comprenant le code d'étiquette spécifique, pour désactiver les moyens de commutation (64) de l'étiquette considérée sous l'effet de l'ordre de sommeil, de façon à mettre hors fonction la source d'énergie continue (62, 63) de l'étiquette considérée.

33. Station de détection selon la revendication 30, caractérisée en ce que les moyens de détection (50, 51) détectent une réponse de collision comprenant le code d'étiquette spécifique, les moyens d'émission (54, 55) émettant vers l'étiquette considérée un ordre de pseudonyme comprenant le code d'étiquette spécifique et un code temporaire qui est lié au code d'étiquette spécifique, pour enregistrer ce code temporaire dans l'étiquette.

34. Station de détection selon la revendication 33, caractérisée en ce que la communication entre la station de détection et l'étiquette considérée a lieu par l'intermédiaire d'ordres de lecture et d'ordres d'écriture qui sont émis par la station de détection et qui comprennent le code temporaire de l'étiquette considérée.

35. Station de détection selon la revendication 33 ou 34, caractérisée en ce que les moyens d'émission (54, 55) émettent vers l'étiquette considérée un ordre d'arrêt comprenant le code temporaire de l'étiquette considérée, pour désactiver les moyens de commutation (64) de l'étiquette considérée sous l'effet de l'ordre d'arrêt, de façon à mettre hors fonction la source d'énergie continue (62, 63) de l'étiquette considérée.

36. Station de détection selon la revendication 32 ou 35, caractérisée en ce que les moyens d'émission (54, 55) émettent un ordre d'identification vers les étiquettes dont les moyens de commutation (64) sont encore activés, pour augmenter la probabilité de réponse de chacune de ces étiquettes, sous l'effet de l'ordre d'identification, grâce à quoi chacune des étiquettes émet ou n'émet pas une réponse d'identification, sous la dépendance d'une probabilité de réponse accrue, cette réponse d'identification comprenant le code d'étiquette spécifique.

37. Etiquette (60-71) prévue pour l'utilisation dans un système d'identification/communication comprenant une station de détection (50-57), cette étiquette comportant des moyens de traitement (60) et une source d'énergie continue (62, 63), et des moyens de commutation (64, 67, 68, 69) pouvant être activés, et pouvant être désactivés après l'activation, pour commuter en fonction et hors fonction la source d'énergie continue, cette source d'énergie continue (62, 63) fournissant de l'énergie aux moyens de traitement (60) dans le cas où elle est en fonction, et cette étiquette comprenant en outre des moyens de réception (65, 66) pour recevoir un signal d'activation provenant de la station de détection, des moyens d'activation (68) pour activer les moyens de commutation (64) sous l'effet du signal d'activation, pour mettre en fonction la source d'énergie continue (62, 63), et des moyens d'émission (70, 71) pour émettre vers la station de détection un code d'étiquette spécifique qui est associé à l'étiquette dont les moyens de commutation ont été activés. caractérisée en ce que l'étiquette comprend en outre des moyens de réception (65, 66) pour recevoir à partir de la station de détection un ordre de sommeil comprenant le code d'étiquette spécifique, et des moyens de désactivation (60, 69) pour désactiver les moyens de commutation (64) sous l'effet de l'ordre de sommeil, de façon à mettre hors fonction la source d'énergie continue.

38. Etiquette selon la revendication 37, caractérisée en ce que les moyens de réception (65, 66) reçoivent un ordre d'identification provenant de la station de détection, les moyens d'émission (70, 71) émettant vers la station de détection une réponse d'identification qui comprend le code d'étiquette spécifique, sous l'effet de cet ordre d'identification, pour enregistrer le code d'étiquette spécifique dans la station de détection.

39. Etiquette selon la revendication 37 ou 38, caractérisée en ce que les moyens de réception (65, 66) reçoivent à partir de la station de détection un ordre de pseudonyme comprenant le code d'étiquette spécifique et un code temporaire qui est lié au code d'étiquette spécifique, l'étiquette comprenant des moyens d'enregistrement (61) pour enregistrer le code temporaire dans l'étiquette.

40. Etiquette selon la revendication 39, caractérisée en ce que les moyens de réception (65, 66) reçoivent à partir de la station de détection un ordre d'arrêt général comprenant un code temporaire standard, pour désactiver, sous l'effet de l'ordre d'arrêt général, les moyens de commutation (64) de l'étiquette, dans le cas où ses moyens de commutation ont été activés, et dans le cas elle n'a pas enregistré un code temporaire pour mettre hors fonction la source d'énergie continue (62, 63) de cette étiquette.

41. Etiquette selon la revendication 39 ou 40, caractérisée en ce que la communication entre la station de détection et l'étiquette dont les moyens de commutation (64) ont été activés, a lieu par l'intermédiaire d'ordres de lecture et d'ordres d'écriture qui sont émis par la station de détection et qui comprennent le code temporaire de l'étiquette.

42. Etiquette selon la revendication 39, 40 ou 41, caractérisée en ce que les moyens de réception (65, 66) reçoivent à partir de la station de détection un ordre d'arrêt comprenant le code temporaire de l'étiquette dont les moyens de commutation (64) ont été activés, pour désactiver les moyens de commutation de cette étiquette sous l'effet de l'ordre d'arrêt, afin de mettre hors fonction la source d'énergie continue (62, 63).

43. Etiquette selon la revendication 37, 38, 39, 40, 41 ou 42, caractérisée en ce que les moyens de réception (65, 66) reçoivent un ordre de collision provenant de la station de détection, l'étiquette comprenant des moyens de réduction (60, 61) pour réduire la probabilité de réponse de cette étiquette sous l'effet de l'ordre de collision, les moyens d'émission (70, 71) émettant ou n'émettant pas une réponse de collision, sous la dépendance d'une probabilité de réponse réduite, cette réponse de collision comprenant le code d'étiquette spécifique.

44. Etiquette selon la revendication 43, caractérisée en ce que les moyens de réception (65, 66) reçoivent un ordre de collision provenant de la station de détection, les moyens de réduction (60, 61) réduisant de façon supplémentaire la probabilité de réponse de l'étiquette sous l'effet de l'ordre de collision, les moyens d'émission (70, 71) émettant ou n'émettant pas une réponse de collision, sous la dépendance d'une probabilité de réponse réduite de façon supplémentaire, cette réponse de collision comprenant le code d'étiquette spécifique.

45. Etiquette selon la revendication 43 ou 44, caractérisée en ce que les moyens de réception (65, 66) reçoivent un ordre d'identification provenant de la station de détection, l'étiquette comprenant des moyens d'augmentation (60, 61) pour augmenter la probabilité de réponse de cette étiquette sous l'effet de l'ordre d'identification, les moyens d'émission (70, 71) émettant ou n'émettant pas une réponse d'identification, sous la dépendance d'une probabilité de réponse accrue, cette réponse d'identification comprenant le code d'étiquette spécifique.

46. Etiquette selon la revendication 43, 44 ou 45, caractérisée en ce que l'étiquette comprend des moyens de génération (60, 61) pour générer un code aléatoire, sous l'effet d'ordres de collision et d'ordres d'identification, et comprend des moyens de comparaison (60, 61) pour comparer ce code aléatoire avec un code de réglage, dans le but de déterminer la probabilité de réponse, la valeur du code de réglage changeant dans un sens sous l'effet d'un ordre de collision, et changeant dans l'autre sens sous l'effet d'un ordre d'identification.

47. Etiquette selon l'une quelconque des revendications précédentes, caractérisée en ce que les ordres de sommeil et les ordres d'arrêt comprennent un code de temps, les moyens de désactivation (60, 69) désactivant les moyens de commutation sous l'effet de ce code, par l'intermédiaire de moyens temporisateurs (69) qui peuvent être réglés par le code de temps et qui sont contenus dans l'étiquette le code de temps étant représentatif d'une durée définie pendant laquelle les moyens de commutation (64) ne peuvent pas être activés.

48. Etiquette selon l'une quelconque des revendications précédentes, caractérisée en ce que si l'étiquette n'a pas reçu un ordre pendant une durée prédéterminée, les moyens de désactivation (60, 69) désactivent les moyens de commutation, par l'intermédiaire de moyens temporisateurs supplémentaires (69) qui sont contenus dans l'étiquette, pour mettre hors fonction sa source d'énergie continue (62, 63).
